(19) Europäisches Patentamt
European Patent Office
Office européen des brevets

(11) **EP 4 741 886 A1**

(12) **EUROPEAN PATENT APPLICATION**
published in accordance with Art. 153(4) EPC

(43) Date of publication:
**13.05.2026 Bulletin 2026/20**

(21) Application number: **24850838.4**

(22) Date of filing: **29.07.2024**

(51) International Patent Classification (IPC):
**G02B 5/04** (2006.01)    **G02B 27/01** (2006.01)

(52) Cooperative Patent Classification (CPC):
**G02B 5/04; G02B 27/01; G03B 21/00; G03B 21/28**

(86) International application number:
**PCT/CN2024/108157**

(87) International publication number:
**WO 2025/031190 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 CN 202310984749**

(71) Applicant: **Shenzhen Yinwang Intelligent
Technologies Co., Ltd.
Shenzhen, Guangdong 518110 (CN)**

(72) Inventors:
• **TONG, Kainian**
  **Shenzhen, Guangdong 518129 (CN)**
• **ZHAO, Dongfeng**
  **Shenzhen, Guangdong 518129 (CN)**
• **CHEN, Xiangyu**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PRISM STRUCTURE, OPTICAL SYSTEM, OPTICAL DISPLAY APPARATUS, AND TERMINAL DEVICE**

(57)   A prism structure (620), an optical system (320), an optical display apparatus (300), and a terminal device are disclosed, to enhance contrast of imaging of a projection lens (340 or 640). The optical system (320) includes the prism structure (620). The prism structure (620) includes a first layer (Q1), a second layer (Q2), and a third layer (Q3) that are sequentially stacked. A fourth side surface ($L_{24}$) of the second layer (Q2) is blackened. The first layer (Q1) is configured to guide an illumination light beam into the second layer (Q2) or guide out a non-projection light beam. The second layer (Q2) is configured to: guide the illumination light beam into a display chip (630), reflect a projection light beam reflected from the display chip (630) to the third layer (Q3), and guide a non-projection light beam reflected from the display chip (630) to a third side surface or guide a non-projection light beam reflected from the display chip (630) to the first layer (Q1). The third layer (Q3) is configured to guide the projection light beam into the projection lens (340 or 640). The non-projection light beam is guided to a blackened prism surface for absorption or is guided out from the prism structure (340), so that the non-projection light beam in the optical system (320) can be effectively suppressed, a probability that the non- projection light beam enters the projection lens (340 or 640) to participate in imaging is reduced, and projection contrast is enhanced.

FIG. 4

EP 4 741 886 A1

**Description**

## CROSS-REFERENCE TO RELATED APPLICATIONS

This application claims priority to Chinese Patent Application No. 202310984749.3, filed with the China National Intellectual Property Administration on August 4, 2023, and entitled "PRISM STRUCTURE, OPTICAL SYSTEM, OPTICAL DISPLAY APPARATUS, AND TERMINAL DEVICE", which is incorporated herein by reference in its entirety.

## TECHNICAL FIELD

This application relates to the field of optical technologies, and in particular, to a prism structure, an optical system, an optical display apparatus, and a terminal device.

## BACKGROUND

In recent years, with development of projection display technologies, people have increasingly high requirements for projection display effect. Among many projection display technologies, a digital light processing (digital light processing, DLP) technology is increasingly popular in the market due to its high brightness and high contrast, and gradually becomes a mainstream technical solution in the field of projection display.

To implement a compact structure, a total internal reflection (total internal reflection, TIR) prism or a reverse total internal reflection (reverse total internal reflection, RTIR) prism is typically used in a DLP display apparatus to couple illumination light. However, in existing prism solutions, non-projection light beams generated by the DLP display apparatus also enter a projection lens and participate in projection. After undergoing one or more reflections or refractions in the projection lens, these non-projection light beams form stray light on a final image plane, affecting contrast of final imaging.

In conclusion, how to enhance the contrast of imaging of the projection lens is a technical problem that urgently needs to be resolved currently.

## SUMMARY

This application provides a prism structure, an optical system, an optical display apparatus, and a terminal device, to enhance contrast of imaging of a projection lens.

According to a first aspect, this application provides a prism structure, including a first triangular prism, a quadrangular prism, and a second triangular prism. The first triangular prism includes three quadrangular side surfaces and two triangular main surfaces. The quadrangular prism includes four quadrangular side surfaces and two quadrangular main surfaces. The second triangular prism includes three quadrangular side surfaces and two triangular main surfaces. A second side surface of the first triangular prism is attached to a first side surface of the quadrangular prism, a second side surface of the quadrangular prism is attached to a first side surface of the second triangular prism, and a fourth side surface of the quadrangular prism is blackened. The first side surface of the quadrangular prism and the second side surface of the quadrangular prism are two opposite surfaces, and the fourth side surface of the quadrangular prism is a surface that is connected to the first side surface of the quadrangular prism and the second side surface of the quadrangular prism and that is opposite to a third side surface of the second triangular prism.

In the foregoing solution, the fourth side surface of the quadrangular prism is blackened. In this way, the non-projection light beam can be guided to the blackened fourth side surface for absorption, so that the non-projection light beam in the prism structure can be effectively suppressed, and a relatively pure projection light beam enters the projection lens for imaging, to enhance projection contrast of the projection lens. In addition, in the prism structure, non-projection light can be suppressed by simply blackening a prism surface. Therefore, no additional display chip needs to be added, no additional angle-selective film layer needs to be coated, and no angle and position constraint of the prism structure needs to be carefully designed for guiding out the non-projection light beam. This further reduces a volume, costs, and weight of the prism structure.

According to a second aspect, this application provides an optical system, including a prism structure. A display chip is placed in a first direction of the prism structure, a projection lens is placed in a second direction of the prism structure, the prism structure includes a first layer, a second layer, and a third layer that are sequentially stacked in the second direction, and a fourth side surface that is of the second layer and that is in an opposite direction of the first direction is blackened. When the optical system works, the first layer is configured to guide an illumination light beam into the second layer or guide out a non-projection light beam. The second layer is configured to: guide the illumination light beam into the display chip, reflect a projection light beam reflected from the display chip to the third layer, and guide a non-projection light beam reflected from the display chip to a fourth side surface or guide out a non-projection light beam reflected from the display chip to the first layer. The third layer is configured to guide the projection light beam into the projection lens.

In the foregoing solution, the optical system can guide the non-projection light beam to the blackened prism surface for absorption or guide out the non-projection light beam from the prism structure, so that the non-projection light beam in the optical system is effectively suppressed, a probability that the non-projection light beam enters the projection lens to participate in imaging is reduced, and projection contrast is enhanced.

In a possible design, the third layer is further configured to reflect the non-projection light beam reflected from the display chip to the fourth side surface. In this way, even if the non-projection light beam reflected from the display chip is not completely reflected back to the second layer, and a part of the non-projection light beam is reflected to the third layer, the part of the non-projection light beam can also be reflected by the third layer to the blackened prism surface in the second layer for absorption, and does not enter a subsequent projection lens. In this way, the third layer may be considered as a leakage compensation layer of the second layer, and is configured to suppress the non-projection light beam that is not reflected to the second layer, to further eliminate the non-projection light beam in the optical system, and reduce impact of stray light in the optical system.

In a possible design, the projection light beam includes a light beam reflected from the display chip at a first deflection angle. The non-projection light beam includes a light beam reflected from the display chip at a second deflection angle and a light beam reflected from the display chip at a third deflection angle, where different deflection angles correspond to different states of the display chip. Optionally, the first deflection angle may be a deflection angle corresponding to an "on" state, the second deflection angle may be a deflection angle corresponding to a "flat" state, and the third deflection angle may be a deflection angle corresponding to an "off" state. In other words, the projection light beam may include an "on" state light beam, and the non-projection light beam may include an "off" state light beam and a "flat" state light beam. In this way, suppressing two non-effective light beams: the "off" state light beam and the "flat" state light beam, can avoid forming of stray light to a greatest extent as a large quantity of "off" state light beams and "flat" state light beams enter the projection lens, thereby helping enhance contrast of projection imaging.

It should be noted that the prism structure in the second aspect may be the prism structure in the first aspect, or may be another prism structure. For example, the prism structure may include at least four prisms, and any one of the at least four prisms may be a triangular prism, a quadrangular prism, a pentagonal prism, or the like. It should be understood that any prism structure that can absorb the non-projection light beam by blackening a prism surface falls within the protection scope of this application.

For ease of description, the following uses an example in which the prism structure in the second aspect is the prism structure in the first aspect. In this case, the first layer is the first triangular prism, the second layer is the quadrangular prism, the third layer is the second triangular prism, the display chip is placed on an outer side of a third side surface of the quadrangular prism, and the projection lens is placed on an outer side of a second side surface of the second triangular prism.

In a possible design of the first aspect or the second aspect, an included angle between the first side surface of the quadrangular prism and the third side surface of the quadrangular prism is 45°. In this way, at the included angle of 45°, the display chip located in the first direction of the prism structure can be mirrored to an opposite direction of the second direction of the prism structure. Therefore, the mirrored display chip and the projection lens located in the second direction of the prism structure may be located on a same axis, and the projection light beam reflected from the display chip is equivalent to being transmitted to the projection lens in a straight line manner. In this way, a probability of deformation or misplacement of the projection light beam can be reduced, and imaging quality of the projection lens can be enhanced.

In a further possible design, the second side surface of the second triangular prism is perpendicular to the third side surface of the second triangular prism. In this way, after the projection light beam reflected from the quadrangular prism is incident into the second triangular prism in a straight line direction, the projection light beam is emitted from the second side surface of the second triangular prism. The emission direction may be kept parallel to the third side surface of the quadrangular prism under the action of the 45° included angle. Further, because the second side surface of the second triangular prism is vertical to the third side surface of the second triangular prism, the projection light beam emitted from the second side surface of the second triangular prism is vertically incident into the third side surface, and then may be vertically emitted from the third side surface. This can ensure that a direction of the projection light beam does not change.

In a possible design of the first aspect or the second aspect, the third side surface of the quadrangular prism and the third side surface of the second triangular prism are located on a same plane, and the display chip is located below the plane. In this way, the third side surface of the quadrangular prism and the third side surface of the second triangular prism form a bottom surface of the prism structure. The bottom surface is set to a plane form, which is not only more beautiful, but also enables the light beam reflected from the display chip to be refracted into the quadrangular prism and the second triangular prism at a same vertical position. This facilitates a transmission path design of a light ray.

In a further possible design, the fourth side surface of the quadrangular prism is parallel to the third side surface of the quadrangular prism, and an area of the fourth side surface of the quadrangular prism is less than an area of the third side surface of the quadrangular prism. In this way, the third side surface of the quadrangular prism is used as the bottom surface of the prism structure, and the fourth side surface of the quadrangular prism is used as a top surface of the prism structure. The bottom surface has a greater area, so that the prism structure is placed more stably.

In a possible design of the second aspect, a part of the non-projection light beam reflected from the display chip undergoes one or more reflections within the quadrangular prism, a part of the non-projection light beam is guided to the fourth side surface of the quadrangular prism, and a part of the non-projection light beam is guided out of the prism structure after being reflected to the first triangular prism. In this way, the non-projection light beam reflected into the quadrangular prism may be guided to a blackened surface for absorption, or is guided out from the prism structure.

In a possible design of the second aspect, another part of the non-projection light beam reflected from the display chip is refracted to the fourth side surface of the quadrangular prism through the third side surface of the quadrangular prism. In this way, the non-projection light beam reflected into the quadrangular prism may be directly transmitted to the blackened surface of the quadrangular prism for absorption.

In a possible design of the second aspect, still another part of the non-projection light beam reflected from the display chip is reflected to the fourth side surface of the quadrangular prism through the second side surface of the second triangular prism. In this way, the non-projection light beam reflected into the second triangular prism may be guided to the blackened surface of the quadrangular prism for absorption.

In a possible design of the second aspect, the projection light beam reflected from the display chip is reflected to the second side surface of the quadrangular prism through the first side surface of the quadrangular prism, is refracted to the second side surface of the second triangular prism from the second side surface of the quadrangular prism, and is guided out to the projection lens from the second side surface of the second triangular prism. In this way, the projection light beam reflected into the quadrangular prism may be directly reflected into the second triangular prism by the quadrangular prism, and then directly refracted by the second triangular prism into the projection lens. In this transmission manner, the projection light beam may be guided to the projection lens through a short optical path, thereby reducing energy waste of the projection light beam.

In a possible design of the second aspect, the non-projection light beam reflected from the display chip is reflected to the second side surface of the quadrangular prism through the first side surface of the quadrangular prism, and is reflected to the fourth side surface of the quadrangular prism from the second side surface of the quadrangular prism. In this way, the non-projection light beam reflected into the quadrangular prism may be guided to the blackened surface for absorption through two reflections in the quadrangular prism. In this way, a transmission path from a moment at which the non-projection light beam enters the quadrangular prism to a moment at which the non-projection light beam is eliminated is short. This can reduce a probability that stray light is introduced when the non-projection light beam undergoes multiple reflections or refractions within in the quadrangular prism.

In a possible design of the second aspect, an incident angle of the projection light beam on the second side surface of the quadrangular prism is less than an incident angle of the non-projection light beam on the second side surface of the quadrangular prism. A smaller incident angle of the projection light beam on the second side surface of the quadrangular prism indicates a higher possibility that the incident angle is less than a critical angle for total reflection corresponding to the second side surface of the quadrangular prism, and therefore, it is more likely to refract the projection light beam from the second side surface of the quadrangular prism. A greater incident angle of the non-projection light beam on the second side surface of the quadrangular prism indicates a higher probability that the incident angle is greater than the critical angle for total reflection corresponding to the second side surface of the quadrangular prism, and therefore, it is more likely to implement total internal reflection of the non-projection light beam from the second side surface of the quadrangular prism. In other words, the incident angle of the projection light beam on the second side surface of the quadrangular prism is less than the incident angle of the non-projection light beam on the second side surface of the quadrangular prism. This helps separate the projection light beam from the non-projection light beam by using the critical angle for total reflection corresponding to the second side surface of the quadrangular prism.

In a possible design of the second aspect, a tilt angle of the second side surface of the quadrangular prism and a refractive index of a material of the quadrangular prism are selected such that the projection light beam is transmitted on the second side surface of the quadrangular prism and the non-projection light beam is reflected from the second side surface of the quadrangular prism. In this way, the selected tilt angle of the second side surface of the quadrangular prism and the refractive index of the material of the quadrangular prism can meet a requirement for ensuring transmission of the projection light beam and reflection of the non-projection light beam, thereby implementing a function of suppressing the non-projection light beam and transmitting the projection light beam.

In a possible design of the second aspect, an incident angle, on the second side surface of the quadrangular prism, of a projection light ray having a maximum incident angle in the projection light beam is less than a critical angle for total reflection corresponding to the second side surface of the quadrangular prism, and an incident angle, on the second side surface of the quadrangular prism, of a projection light ray having a minimum incident angle in the non-projection light beam is greater than or equal to the critical angle for total reflection corresponding to the second side surface of the quadrangular prism. In this way, there is no overlapping between the incident angle of the projection light beam on the second side surface of the quadrangular prism and the incident angle of the non-projection light beam on the second side surface of the quadrangular prism, and therefore there is a specific spacing between the projection light beam and the non-projection light beam. This provides support for separating the two types of light beams through reflection or refraction in the prism structure.

In a possible design of the second aspect, the refractive index of the material of the quadrangular prism is the same as a refractive index of a material of the second triangular prism. In this way, the second side surface of the quadrangular prism and the first side surface of the second triangular prism that are attached to each other are equivalent to transparent glass for transmission of the projection light beam, and may be used to keep a main transmission direction of the projection light beam unchanged.

In a possible design of the second aspect, a non-effective optical path part of one or more outer surfaces of the prism structure other than the fourth side surface of the quadrangular prism is blackened. In this way, a surface that is of the entire prism structure and through which no effective light beam passes is blackened, so that a non-projection light beam projected onto the surface can be directly absorbed through the blackened surface, reflection or refraction of the non-projection light beam in the prism structure is suppressed as much as possible, and a probability of generating stray light in the projection lens can be reduced.

In a possible design of the second aspect, the second triangular prism is fastened to or integrated with a lens element that is closest to the second triangular prism and that is in the projection lens. This can not only reduce a volume of the optical system, but also reduce a back focal distance of the optical system, so that design difficulty of a back focal system is reduced.

In a further possible design, when the second triangular prism is fastened to the lens element, a side that is of the lens element and that is opposite to the second triangular prism is disposed as a plane. In this way, a plane of the last lens element may be directly attached to the second triangular prism P3 for fastening. A plane shape may make fastening easier.

According to a third aspect, this application provides an optical display apparatus, including a display chip, a projection lens, and the optical system according to any design of the second aspect. The display chip is configured to reflect an illumination light beam guided from a second layer at different deflection angles. The projection lens is configured to project an enlarged image based on a projection light beam guided from a third layer.

In a possible design, the display chip may include but is not limited to a digital micromirror device (digital micromirror device, DMD), a liquid crystal display (liquid crystal display, LCD) chip, a liquid crystal on silicon (liquid crystal on silicon, LCOS) chip, or a laser beam scanning (laser beam scanning, LBS) display.

In a possible design, the projection lens may include one or more lens elements. When a requirement for projection definition is high and a requirement for a projection field of view angle is large, a large quantity of lens elements may be configured in the projection lens. When a requirement for projection definition is low and a requirement for a projection field of view angle is low, a small quantity of lens elements may be configured in the projection lens.

In a possible design, the optical display apparatus further includes a light source. The light source is configured to emit an illumination light beam to the third layer.

In a further possible design, the light source may include but is not limited to a laser diode (laser diode, LD), a light emitting diode (light emitting diode, LED), an organic light emitting diode (organic light emitting diode, OLED), or the like.

In a possible design, the optical display apparatus further includes a display. The display is configured to display an enlarged image from the projection lens.

According to a fourth aspect, this application provides a terminal device, including the optical display apparatus according to any design of the third aspect.

In a possible design, the terminal device may be a projector, a head-up display apparatus (head-up device, HUD), or a near-eye display (near-eye display, NED) device.

For beneficial effect of any design in the third aspect and the fourth aspect, refer to the beneficial effect that can be achieved in the corresponding design of the second aspect. Details are not described again in this application.

## BRIEF DESCRIPTION OF DRAWINGS

FIG. 1 illustrates a total reflection optical path according to this application;
FIG. 2a illustrates an application scenario of a projector to which this application is applicable;
FIG. 2b illustrates an application scenario of a vehicle-mounted projector according to this application;
FIG. 2c illustrates an application scenario of a head-up display apparatus according to this application;
FIG. 2d illustrates an application scenario of an augmented reality device according to this application;
FIG. 3a illustrates a structure of an optical display apparatus according to this application;
FIG. 3b illustrates stray light distribution in an optical display apparatus;
FIG. 3c illustrates a solution of a prism structure according to the industry;
FIG. 3d illustrates another solution of a prism structure according to the industry;
FIG. 3e illustrates still another solution of a prism structure according to the industry;
FIG. 4 illustrates a structure of a prism structure according to this application;

FIG. 5 illustrates volume comparison between a prism structure provided in this application and a prism structure provided in the industry;

FIG. 6 illustrates an optical path of an optical system according to this application;

FIG. 7a illustrates a blackening manner of a prism structure according to this application;

FIG. 7b illustrates another blackening manner of a prism structure according to this application;

FIG. 8a illustrates a deflection state of a display chip according to this application;

FIG. 8b illustrates a reflected light ray of a display chip according to this application;

FIG. 9 illustrates a light beam transmission path according to this application;

FIG. 10 is a diagram of an example in which a same light ray is irradiated to a second side surface at different tilt angles according to this application;

FIG. 11 illustrates a structure of a projection lens according to this application;

FIG. 12 illustrates a fastening manner between a lens element and a prism structure according to this application;

FIG. 13 illustrates a calculation manner of a back focal distance according to this application;

FIG. 14 illustrates a circuit of an optical display apparatus according to this application; and

FIG. 15 illustrates a functional framework of a transportation apparatus according to this application.

## DESCRIPTION OF EMBODIMENTS

The following describes in detail embodiments of this application with reference to accompanying drawings.

Some terms in this application are described below. It should be noted that these explanations are for ease of understanding by a person skilled in the art, and are not intended to limit the protection scope claimed by this application.

1. Projection light beam and non-projection light beam

The projection light beam may be understood as a light beam that needs to enter a projection lens for projection. Among light beams reflected from a display chip, some light beams are required for projection, which may be projected into the projection lens for projection imaging. These light beams are projection light beams. Conversely, the non-projection light beam may be understood as a light beam that does not need to enter the projection lens for projection. Once the non-projection light beam enters the projection lens, the non-projection light beam is likely to become stray light, which affects contrast of projection imaging of the projection light beam. Therefore, the non-projection light beam needs to be prevented from entering the projection lens.

2. Total internal reflection

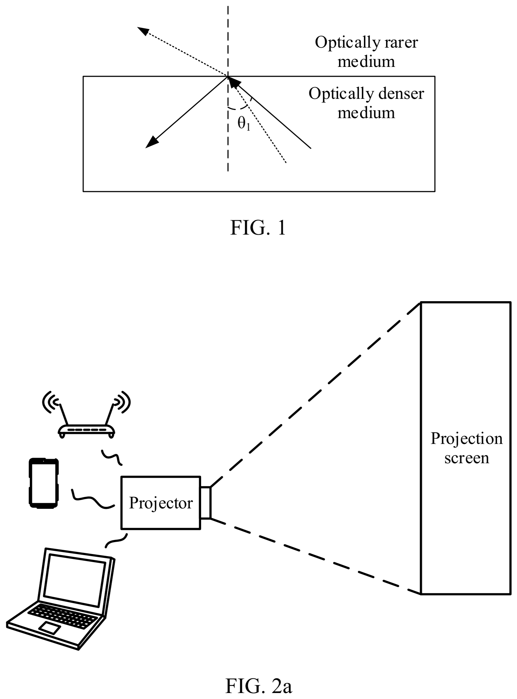

Total internal reflection, also referred to as total reflection, is an optical phenomenon. When a light ray is emitted from an optically denser medium to an optically rarer medium, if an incident angle is greater than a critical angle for total reflection, a refracted light ray completely disappears, and all incident light rays are reflected without entering the optically rarer medium. This phenomenon is referred to as total reflection. For example, refer to FIG. 1. On an interface between the optically denser medium and the optically rarer medium, a light ray (as shown by a dashed line in the figure) that is from the optically denser medium and whose incident angle is less than a critical angle for total reflection $\theta_1$ may be refracted into the optically rarer medium, and a light ray (as shown by a solid line in the figure) that is from the optically denser medium and whose incident angle is greater than or equal to the critical angle for total reflection $\theta_1$ is completely reflected back to the optically denser medium. The critical angle for total reflection $\theta_1$ is related to a refractive index $n_1$ of the optically denser medium and a refractive index $n_2$ of the optically rarer medium, and may be specifically calculated according to the following formula (1.1):

$$\theta_1 = \arcsin\left(\frac{n_2}{n_1}\right) (1.1).$$

3. Back focal distance

The back focal distance (back focal distance, BFD), also referred to as a back focal length (back focal length BFL), may be understood as a distance from a center point of a last lens element in the projection lens to a plane on which the display chip is located. The last lens element in the projection lens may be understood as a lens element that is closest to a prism in the projection lens.

The foregoing describes some terms used in this application, and the following describes possible application scenarios of this application.

In a possible application scenario, the prism structure in this application may be integrated into a projector. Refer to FIG. 2a. The projector may project a light ray onto a wall or a projection screen, so that the wall or the projection screen displays an image corresponding to the light ray. Based on different projection ratios, projectors may be classified into a long-focus projector, a short-focus projector, and an ultra-short-focus projector. The long-focus projector is suitable for use in a bedroom and a living room, and is usually placed on a bedside table or a sofa. The short-focus projector is mainly applicable to education or business projection, for example, cinema projection and office projection. The ultra-short-focus projector may be disposed at a short distance. For example, a projector of a laser TV (laser TV) may be disposed on a television cabinet.

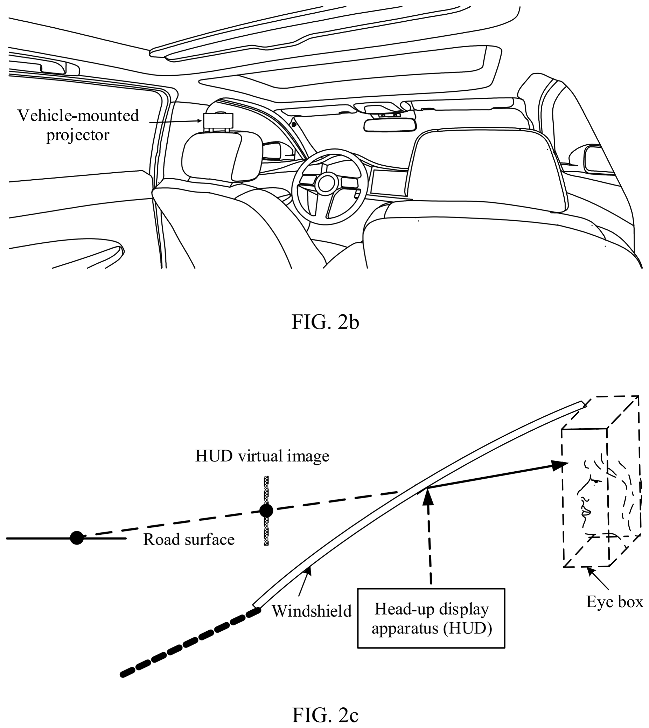

In some special scenarios, the projector may alternatively be installed on a transportation means. For example, a projector installed on a vehicle is referred to as a vehicle-mounted projector, a projector installed on an airplane is referred to as an airborne projector, and a projector installed on a ship is referred to as a shipborne projector. For example, the projector is installed on a vehicle. Refer to FIG. 2b. The vehicle-mounted projector may be installed at any position in a vehicle cabin, for example, above a headrest of a seat, behind a seat, in a car armrest console, or in front of rear glass of the vehicle. In some scenarios, the vehicle-mounted projector may further have a steering function, and implement projection on a cabin curtain, panoramic roof glass, side window glass, or a front windshield or rear windshield by rotating to different directions.

In another possible application scenario, the prism structure in this application may be integrated into a head-up display apparatus (head-up device, HUD). Refer to FIG. 2c. FIG. 2c shows an example in which the HUD is installed on the vehicle. The HUD may project a formed image (referred to as a HUD virtual image) into a front field of view range of a driver (also referred to as an eye box), and integrate the formed image with real road surface information, to enhance perception of the driver on an actual driving environment. For example, the HUD may superimpose an HUD virtual image carrying navigation information and/or instrument information (for example, information such as a driving speed, a driving mileage, a rotation speed, a temperature, a fuel capacity, and a vehicle light status) in a real environment outside the vehicle, so that the driver can obtain visual effect of augmented reality. Specifically, the HUD may be applied to scenarios such as augmented reality (augmented reality, AR) navigation, adaptive cruise control, and lane departure warning. The HUD includes but is not limited to a windshield (windshield, W)-HUD, an augmented reality head-up display (augmented reality head-up display, AR-HUD), and the like.

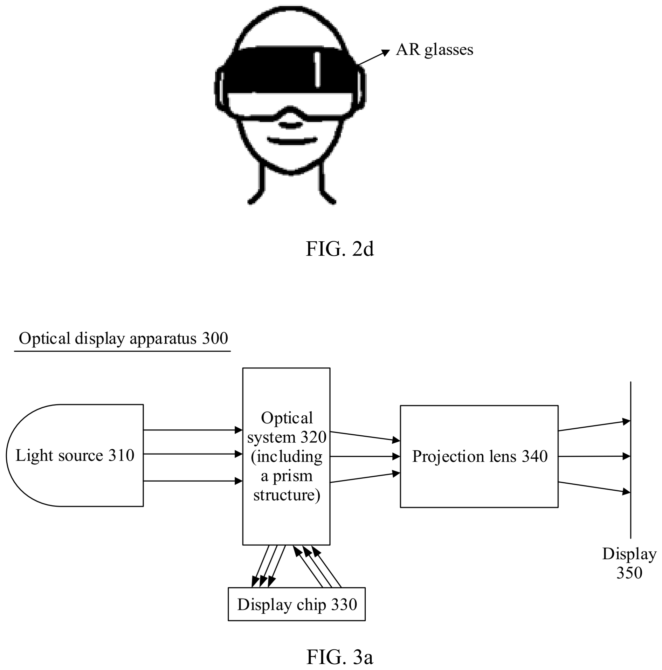

In still another possible application scenario, the prism structure in this application may be integrated into a near eye display (near eye display, NED) device. The NED device may be, for example, an augmented reality (augmented reality, AR) device, a virtual reality (virtual reality, VR) device, or a mixed reality (mixed reality, MR) device. The AR device may include but is not limited to AR glasses or an AR helmet, the VR device may include but is not limited to VR glasses or a VR helmet, and the MR device may include but is not limited to MR glasses or an MR helmet. Refer to FIG. 2d. The AR glasses are used as an example. A user may wear an AR glasses device to play a game, watch a video, participate in a virtual conference, perform video shopping, or the like.

It should be understood that the foregoing possible application scenarios are merely examples. The prism structure provided in this application may be further applied to other possible scenarios, and is not limited to the foregoing example scenarios. For example, the prism structure may be further used in a vehicle-mounted display, or may be further used in a smart car light, or the like.

In this application, the prism structure may be integrated into an optical display apparatus. The optical display apparatus may be, for example, the foregoing projector, HUD, or NED device. FIG. 3a illustrates a structure of an optical display apparatus. The optical display apparatus 300 may include a light source 310, an optical system 320, a display chip 330, and a projection lens 340. A prism structure may be integrated into the optical system 320. Optionally, the optical display apparatus 300 may further include a display 350. The light source 310 is located on the left side of the optical system 320, the display chip 330 is located below the optical system 320, the projection lens 340 is located on the right side of the optical system 320, and the display 350 is located on the right side of the projection lens 340. When the optical display apparatus 300 works, the light source 310 may emit illumination light. The illumination light is refracted by the prism structure in the optical system 320, and then is irradiated on the display chip 330. Then, the illumination light is reflected from the display chip 330 back to the optical system 320, and is guided out to the projection lens 340 through the prism structure in the optical system 320. In this way, an image corresponding to an incident light ray is enlarged through the projection lens 340, and is finally imaged on the display 350.

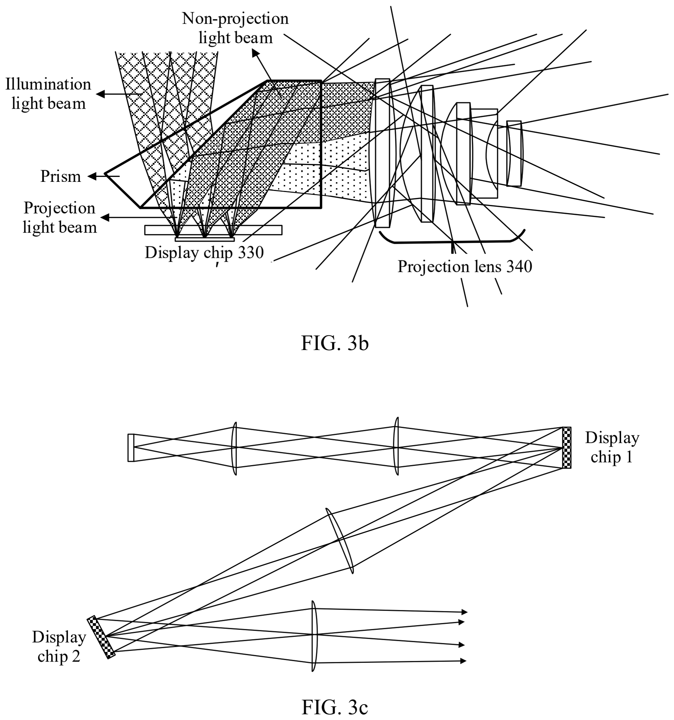

It may be understood that a light beam reflected from the display chip 330 usually includes a projection light beam and a non-projection light beam. The projection light beam is a light beam required for projection. The non-projection light beam is a light beam that is not required for projection, and should be prevented from entering the projection lens 340. However, as described in the background, in an existing prism solution, the non-projection light beam is also guided out to the projection lens 340. After one or more reflections or refractions in the projection lens 340, the non-projection light beam is likely to form stray light that is emitted in all directions, as shown in FIG. 3b. The stray light significantly interferes with imaging brightness of the projection light beam by the projection lens 340, and further reduces projection contrast.

Although some solutions have been provided in the industry to prevent the non-projection light beam from entering the projection lens, most of these solutions need to be implemented at the cost of compromising a volume or costs. Examples are as follows.

Refer to FIG. 3c. In one solution, two display chips 1 and 2 are disposed, so that brightness of pixels on the display chip 1 can have a squared relationship relative to the original contrast through the display chip 2. For example, it is assumed that contrast of 10:1 may be obtained after a bright pixel and a dark pixel are processed by the display chip 1. After being processed by the second display chip 2, 10:1 may be further superimposed on the contrast of 10:1, so that the contrast is reduced to 100:1. Although this solution can effectively increase a brightness difference between different pixels, a corresponding projection optical path also needs to be added when a display chip is added. Therefore, a projection display apparatus has a complex overall structure and a greater volume. In addition, adding a display chip also greatly increases costs due to a high price of the display chip, and consequently a design concept of miniaturization and low costs cannot be met.

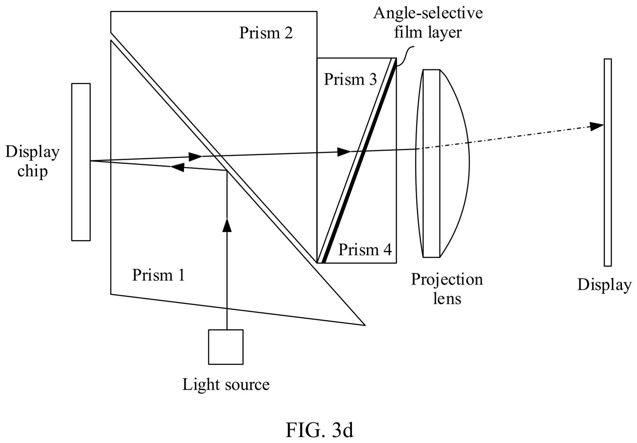

Refer to FIG. 3d. In another solution, an angle-selective film layer is coated on a surface that is of a prism 4 and that is opposite to a prism 3 due to a feature that an emergent angle of a projection light beam reflected from a display chip is different from an emergent angle of a non-projection light beam reflected from the display chip. In addition, a selected angle value of the angle-selective film layer is set to be greater than or equal to an incident angle at which the projection light beam is projected onto the surface and less than an incident angle at which the non-projection light beam is projected onto the surface. In this way, a projection light beam whose incident angle is less than or equal to the selected angle value can enter the projection lens through the angle-selective film layer, and a non-projection light beam whose incident angle is greater than the selected angle value cannot pass through the angle-selective film layer and is reflected back to the prism 3. In this manner, although the non-projection light beam can be filtered due to the angle selection feature of the angle-selective film layer, it is difficult to achieve an ideal coating effect of the angle-selective film layer at a current stage, and there is a high probability that some non-projection light beams still enter the projection lens after passing through the angle-selective film layer, affecting the projection contrast. In addition, after being reflected back to the prism 3, the non-projection light beam may undergo one or more reflections or refractions within the prism 3, a prism 2, and a prism 1, and is again emitted to the surface that is of the prism 4 and that is opposite to the prism 3. If an incident angle in this case is less than or equal to the selected angle value, the non-projection light beam enters a subsequent projection lens through the angle-selective film layer, and becomes stray light. It can be learned that this solution can prevent only some non-projection light beams from entering the projection lens. In addition, adding the angle-selective film layer increases corresponding costs accordingly, and consequently a design concept of low costs cannot be met.

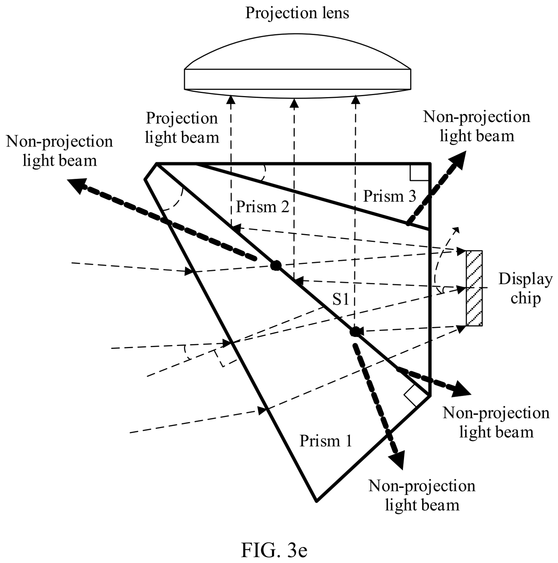

Refer to FIG. 3e. In still another solution, the prism 1, the prism 2, and the prism 3 are assembled together, and a special spatial position and angle constraint is formed between the three prisms through a precise design. The non-projection light beam (as shown by a black solid line in the figure) is guided out from one or more of the prism 1, the prism 2, and the prism 3 by using the special spatial position and angle constraint, and the projection light beam (as shown by a light solid line in the figure) is totally reflected from a surface S1 of the prism 2 to the prism 3, and then is guided out from the prism 3 to the projection lens. Although this solution can guide out the non-projection light beam from the prism structure, implementation of this solution completely depends on a spatial position and angle design of the three prisms. The three prisms need to meet a plurality of light beam constraint conditions, and consequently the entire prism structure needs to be implemented by using a large spatial volume. This also greatly increases a volume and a weight of the entire prism structure.

In view of this, this application provides a prism structure that can separate a projection light beam from a non-projection light beam without compromising a volume, a weight, or costs of the entire prism structure as much as possible, to prevent the non-projection light beam from entering a subsequent projection lens and enhance projection contrast of the projection lens.

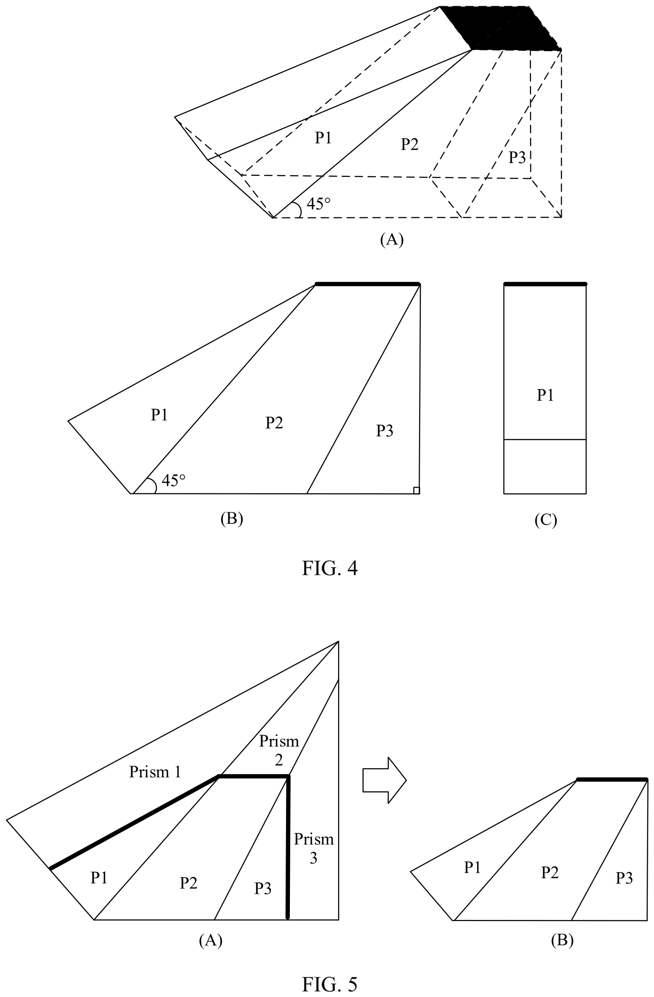

Based on the foregoing content, the following describes in detail the prism solution provided in this application with reference to FIG. 4 to FIG. 12.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In addition, in this application, "angle" does not mean an absolute angle, and a specific engineering error may be allowed. "Uniformity" does not mean absolute uniformity, and a specific engineering error may be allowed. "Verticality" does not mean absolute verticality, and a specific engineering error may be allowed.

FIG. 4 is a diagram of a structure of a prism structure according to this application. (A) in FIG. 4 shows a three-dimensional diagram of the prism structure, (B) in FIG. 4 shows a front view of the prism structure, and (C) in FIG. 4 shows a left view of the prism structure. Refer to (A) in FIG. 4 to (C) in FIG. 4. The prism structure includes a first triangular prism P1, a quadrangular prism P2, and a second triangular prism P3. The first triangular prism P1, the quadrangular prism P2, and the second triangular prism P3 are assembled into one prism. For ease of description, a perspective shown in (A) in FIG. 4 is used as an example. For any triangular prism or quadrangular prism, a left side surface shown in the figure is referred to as a first side surface, a right side surface shown in the figure is referred to as a second side surface, a bottom side surface shown in the figure is referred to as a third side surface, a front surface shown in the figure is referred to as a first main surface, a rear surface shown in the figure is referred to as a second main surface, and an upper surface of the quadrangular prism shown in the figure is referred to as a fourth side surface. In this case, the first triangular prism P1 includes three quadrangular side surfaces and two triangular main surfaces. The quadrangular prism P2 includes four quadrangular side surfaces and two quadrangular main surfaces. The second triangular prism P3 includes three quadrangular side surfaces and two triangular main surfaces. A second side surface of the first triangular prism P1 is attached to a first side surface of the quadrangular prism P2, a second side surface of the quadrangular prism P2 is attached to a first side surface of the second triangular prism P3, and a fourth side surface of the quadrangular prism P2 is blackened.

Optionally, in the prism structure, any two attached side surfaces may have a same shape and size. For example, refer to (A) in FIG. 4. The second side surface of the first triangular prism P1 and the first side surface of the quadrangular prism P2 have a same shape and size. The second side surface of the quadrangular prism P2 and the first side surface of the second triangular prism P3 have a same shape and size.

Further, optionally, the two side surfaces may be attached to each other by attaching four corners of the two side surface surfaces together. For example, that the second side surface of the first triangular prism P1 is attached to the first side surface of the quadrangular prism P2 may be understood as that four corners of the second side surface of the first triangular prism P1 are correspondingly attached to four corners of the first side surface of the quadrangular prism P2, and that the second side surface of the quadrangular prism P2 is attached to the first side surface of the second triangular prism P3 may be understood as that four corners of the second side surface of the quadrangular prism P2 are correspondingly attached to four corners of the first side surface of the second triangular prism P3. In addition to the four corners that are attached together, there is a thin air layer between the second side surface of the first triangular prism P1 and the first side surface of the quadrangular prism P2, and a thin air layer between the second side surface of the quadrangular prism P2 and the first side surface of the second triangular prism P3.

It may be understood that the fourth side surface of the quadrangular prism P2 is blackened means that an outer surface of the quadrangular prism P2 is blackened. The blackening operation may be performed before the first triangular prism P1, the quadrangular prism P2, and the second triangular prism P3 are assembled, or may be performed after the first triangular prism P1, the quadrangular prism P2, and the second triangular prism P3 are assembled together. This is not specifically limited.

It may be understood that any black material, for example, printing ink, water-based paint, paint, or ink, may be selected for blackening.

According to the prism structure shown in FIG. 4, the fourth side surface of the quadrangular prism P2 is blackened, so that the non-projection light beam may be guided to the blackened fourth side surface for absorption, and the relatively pure projection light beam enters the projection lens for imaging. It can be learned that, in the prism structure, only the prism surface needs to be blackened, to eliminate non-projection light. Therefore, no additional display chip needs to be added as shown in FIG. 3c, and no additional angle-selective film layer needs to be coated as shown in FIG. 3d. In this way, a probability that the non-projection light beam enters the projection lens can be reduced, and projection contrast can be enhanced without compromising a volume, costs, and a weight as much as possible.

In addition, compared with the prism structure shown in FIG. 3e, the prism structure shown in FIG. 4 may have a smaller volume. For example, FIG. 5 is a diagram of a volume comparison between the prism structure shown in FIG. 4 and the prism structure shown in FIG. 3e. (A) in FIG. 5 shows the prism structure shown in FIG. 3e, and (B) in FIG. 5 shows the prism structure shown in FIG. 4. It can be learned from (A) in FIG. 5 and (B) in FIG. 5 that the prism structure shown in FIG. 4 may be considered as a prism structure obtained by cutting off an upper half part, a left part of about 1/4, and a right part of about 1/4 of the prism structure shown in FIG. 3e along a bold black line shown in (A) in FIG. 5, and blackening a top surface of the prism structure obtained through cutting. It can be learned that a bottom edge length and a height of the prism structure shown in FIG. 4 are both shorter than those of the prism structure shown in FIG. 3e. For example, it is found through actual product measurement that the bottom edge length of the prism structure shown in FIG. 4 is reduced by about 28% compared with that of the prism structure shown in FIG. 3e, and a volume of the prism structure shown in FIG. 4 is reduced by about 58% compared with that of the prism structure shown in FIG. 3e. This greatly reduces a volume and a weight of the prism structure. In addition, because the bottom edge length of the prism structure is reduced, a length from a bottom edge of the prism structure to a subsequent projection lens may be shortened accordingly. This helps reduce a back focal length of the optical display apparatus, and further helps reduce design difficulty of a back focal system.

The foregoing describes the prism structure. This application further provides an optical system. The following describes the optical system in detail.

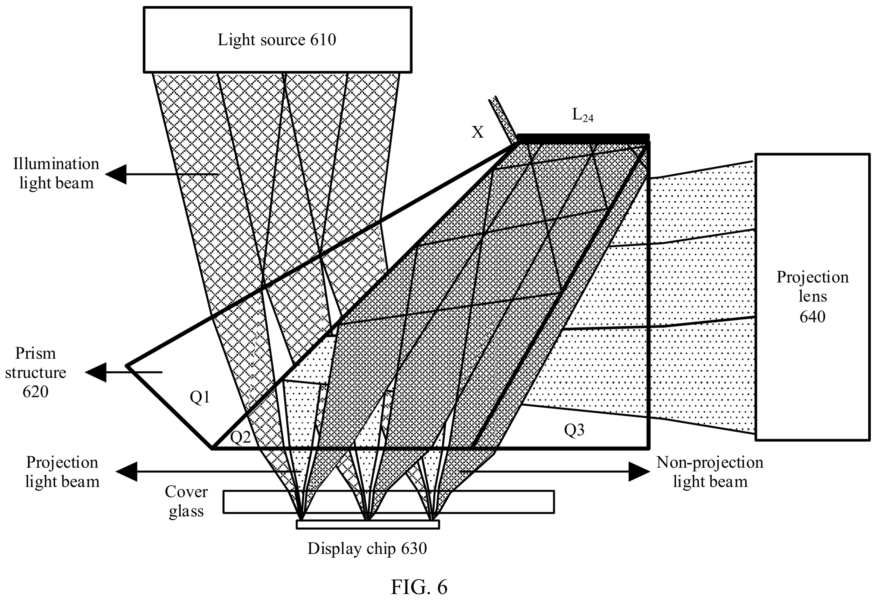

FIG. 6 illustrates an optical path of an optical system according to this application. The optical system includes a prism structure 620. A display chip 630 is placed in a first direction (as shown below in the figure) of the prism structure 620, and a projection lens 640 is placed in a second direction (as shown on the right in the figure) of the prism structure 620. Optionally, a light source 610 is placed in a third direction (as shown on the upper left of the figure) of the prism structure 620. The prism structure 620 may include a first layer Q1, a second layer Q2, and a third layer Q3 that are sequentially stacked in the second direction, and a fourth side surface $L_{24}$ that is of the second layer Q2 and that is in an opposite direction (as shown above in the figure) of the first direction is blackened. It may be understood that FIG. 6 uses an example in which the first direction is shown below in the figure, the second direction is shown on the right of the figure, and the third direction is shown on the upper left of the figure. However, the first direction, the second direction, or the third direction may alternatively be any one or more directions, for example, any one or more directions of the above, the below, the left, the right, the upper left, the lower left, the upper right, or the lower right. This is not specifically limited.

Still refer to FIG. 6. When the optical system works, the light source 610 may emit an illumination light beam to the first layer Q1 of the prism structure 620. The first layer Q1 may guide the illumination light beam emitted into the first layer Q1 into the second layer Q2. The second layer Q2 may guide the illumination light beam from the first layer Q1 into the display chip 630. The display chip 630 may reflect the illumination light beam guided into the display chip 630 at different deflection angles to obtain a projection light beam and a non-projection light beam, and may reflect the projection light beam and all or a part of the non-projection light beam back to the second layer Q2. After being emitted into the second layer Q2, the projection light beam may be reflected by the second layer Q2 to the third layer Q3, and then the projection light beam may be guided by the third layer Q3 into the projection lens 640 for imaging. In contrast, after being emitted into the second layer Q2, the non-projection light beam may be guided to a fourth side surface $L_{24}$ through one or more reflections or refractions in the second layer Q2 for absorption through the blackened fourth side surface $L_{24}$, or may be guided out to the first layer Q1 through one or more reflections or refractions in the second layer Q2, and then the non-projection light beam emitted into the first layer Q1 may be guided out from the prism structure 620, for example, guided out from a position X on the upper left of the figure. It can be learned that the optical system can guide the non-projection light beam to a blackened prism surface for absorption or guide out the non-projection light beam from the prism structure, so that the non-projection light beam in the optical system is effectively suppressed, a probability that the non-projection light beam enters the projection lens to participate in imaging is reduced, and projection contrast is enhanced.

In an optional implementation, the third layer Q3 may further reflect the non-projection light beam reflected from the display chip 630 to the fourth side surface $L_{24}$ of the second layer Q2. For example, still refer to FIG. 6. Even if not all non-projection light beam reflected from the display chip 630 is reflected back to the second layer Q2, a part (for example, the part of non-projection light beam on the rightmost in the figure) of the non-projection light beam is reflected to the third layer Q3, and may be reflected by the third layer Q3 to the blackened fourth side surface $L_{24}$ in the second layer Q2 for absorption, without entering the subsequent projection lens 640. In this way, the third layer Q3 may be considered as a leakage compensation layer of the second layer Q2, and is configured to suppress the non-projection light beam that is not reflected to the second layer Q2, to further eliminate the non-projection light beam in the optical system and reduce impact of stray light in the optical system.

It should be noted that FIG. 6 uses three illumination light beams as an example, but an actual illumination light beam may be any one or more light beams, and a direction of the actual illumination light beam may be the same as or different from that shown in the figure. In addition, each illumination light beam may be reflected from the display chip 630 to obtain a projection light beam and a non-projection light beam. Emergent angles of a projection light beam and a non-projection light beam that are obtained by reflecting a same illumination light beam are different. Projection light beams obtained by reflecting different illumination light beams or non-projection light beams obtained by reflecting different illumination light beams have different positions, but same emergent angles.

The following separately describes the functional components and structures shown in FIG. 6, to provide an example of a specific implementation solution.

I. Light source

In a possible implementation, the light source 610 may be a semiconductor light source. The semiconductor light source means that the light source emits light based on a semiconductor material. Specifically, the light source may include but is not limited to a laser diode (laser diode, LD), a light emitting diode (light emitting diode, LED), an organic light emitting diode (organic light emitting diode, OLED), or the like. Generally, the semiconductor light source has advantages such as high electro-optical conversion efficiency, good reliability, a high brightness, a good color, low energy consumption, a long service life, and a small size.

II. Prism structure

It may be understood that the prism structure 620 may be the prism structure shown in FIG. 4, or may be another prism structure. For example, the prism structure 620 may include at least four prisms, and any one of the at least four prisms may be a triangular prism, a quadrangular prism, a pentagonal prism, or the like. It should be understood that any prism structure that can absorb the non-projection light beam by blackening a prism surface falls within the protection scope of this application.

For ease of description, the following uses an example in which the prism structure 620 is the prism structure shown in FIG. 4. In this case, the first layer Q1 of the prism structure 620 may be considered as the first triangular prism P1 in the prism structure shown in FIG. 4, the second layer Q2 of the prism structure 620 may be considered as the quadrangular prism P2 in the prism structure shown in FIG. 4, and the third layer Q3 of the prism structure 620 may be considered as the second triangular prism P3 in the prism structure shown in FIG. 4.

In a possible implementation, refer to FIG. 4. An included angle between the first side surface of the quadrangular prism P2 and the third side surface of the quadrangular prism P2 may be 45°. In this way, as shown in FIG. 6, the 45° can mirror the display chip 630 located below the prism structure 620 to the left of the prism structure 620 shown in the figure. In this way, the mirrored display chip 630 and the projection lens 640 located on the right of the prism structure 620 shown in the figure may be on a same axis. Therefore, a projection light beam reflected from the display chip 630 is equivalent to being linearly transmitted to the projection lens 640 in a horizontal direction shown in the figure. In this way, a probability of deformation or misplacement of the projection light beam can be reduced, and imaging quality of the projection lens 640 can be enhanced.

In a further possible implementation, refer to FIG. 4. The second side surface of the second triangular prism P3 and the third side surface of the second triangular prism P3 are perpendicular to each other. In this way, as shown in FIG. 6, a projection light beam reflected from the quadrangular prism P2 is emitted into the second triangular prism P3 in a horizontal direction shown in the figure, and then is emitted from the second side surface of the second triangular prism P3. Because the second side surface of the second triangular prism P3 is perpendicular to the third side surface of the second triangular prism P3, the second side surface of the second triangular prism P3 may be considered as a vertical plane. The vertical plane can ensure that an emission direction of the horizontally incident projection light beam does not change as much as possible.

In a possible implementation, refer to FIG. 4 and FIG. 6 together. The third side surface of the quadrangular prism P2 and the third side surface of the second triangular prism P3 may be located on a same plane, and the display chip 630 is located below the plane shown in the figure. In this way, based on the placement manner shown in the figure, the third side surface of the quadrangular prism P2 and the third side surface of the second triangular prism P3 form a bottom surface of the prism structure 620. The bottom surface is set to a plane form, which is not only more beautiful, but also enables a light beam reflected from the display chip 630 to be refracted into the quadrangular prism P2 and the second triangular prism P3 at a same vertical position. This facilitates a transmission path design of a light ray.

In a possible implementation, refer to FIG. 4 and FIG. 6 together. The third side surface of the quadrangular prism P2 is parallel to the fourth side surface of the quadrangular prism P2, and an area of the third side surface of the quadrangular prism P2 is greater than an area of the fourth side surface of the quadrangular prism P2. In this way, based on the placement manner shown in the figure, the third side surface of the quadrangular prism P2 is used as a bottom surface of the prism structure 620, and the fourth side surface of the quadrangular prism P2 is used as a top surface of the prism structure 620. The bottom surface has a greater area, so that the prism structure 620 is placed more stably.

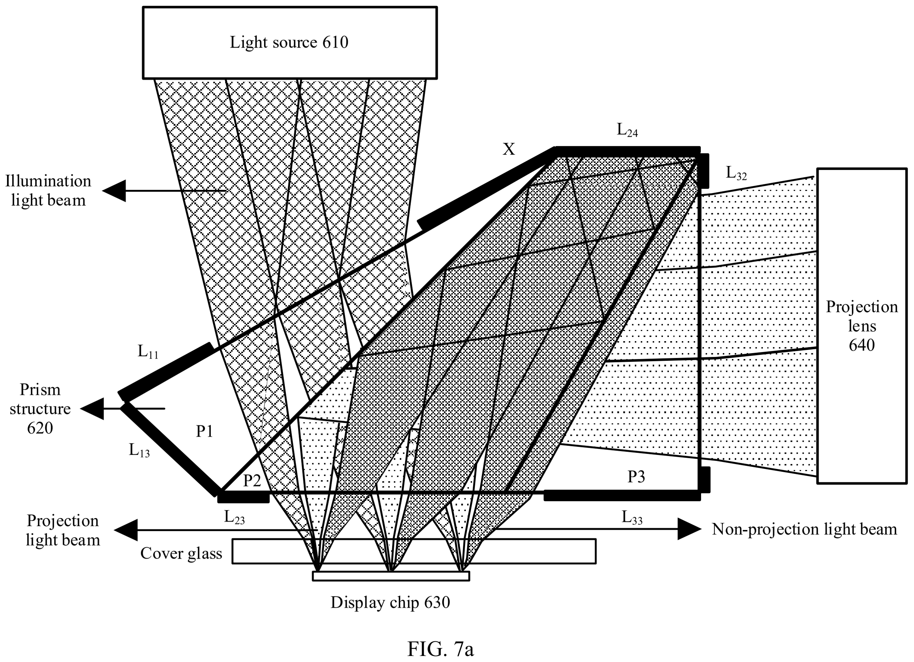

In a possible implementation, in addition to the fourth side surface $L_{24}$ of the quadrangular prism P2 being blackened, a non-effective optical path part on one or more other outer surfaces of the prism structure 620 may also be blackened. For example, refer to FIG. 7a. Because a light beam is basically not transmitted in a front-rear direction shown in the figure, a main surface in the front-rear direction shown in the figure is ignored. Outer surfaces of the entire prism structure other than the fourth side surface $L_{24}$ of the quadrangular prism P2 may include the following five outer surfaces.

1. A first side surface $L_{11}$ of the first triangular prism P1.

As shown in FIG. 7a, on the first side surface $L_{11}$ of the first triangular prism P1, surfaces other than a surface used to receive an illumination light beam may be considered as surfaces corresponding to the non-effective optical path, and these surfaces may be blackened.

It should be noted that although a part of a non-projection light beam is also guided out from the first side surface $L_{11}$ of the first triangular prism P1, for example, in the foregoing optical system design, a part of the non-projection light beam is guided out from a position X of the first side surface $L_{11}$ shown in FIG. 7a. After the position is blackened, the non-projection light beam guided to the position can be directly absorbed through the blackened surface, and does not need to be guided out. In other words, the blackening operation on the first side surface $L_{11}$ of the first triangular prism P1 does not affect effect of eliminating the non-projection light beam in the prism structure, but only changes an original manner of guiding out the non-projection light beam to an absorption manner of the non-projection light beam.

2. A third side surface $L_{13}$ of the first triangular prism P1.

As shown in FIG. 7a, because no illumination light beam or projection light beam is irradiated onto the third side surface $L_{13}$ of the first triangular prism P1, the surface may be integrally blackened.

3. A third side surface $L_{23}$ of the quadrangular prism P2.

As shown in FIG. 7a, on the third side surface $L_{23}$ of the quadrangular prism P2, surfaces other than a surface used to guide out the illumination light beam to the display chip 630 and a surface used to receive the projection light beam and the non-projection light beam that are reflected from the display chip 630 may be considered as surfaces corresponding to the non-effective optical path, and these surfaces may be blackened.

Optionally, considering that most positions of the third side surface $L_{23}$ of the quadrangular prism P2 are occupied by an effective optical path, it may not be easy to find a position of the non-effective optical path. Therefore, in some implementations, the surface may not be blackened directly, to reduce difficulty in manufacturing a prism.

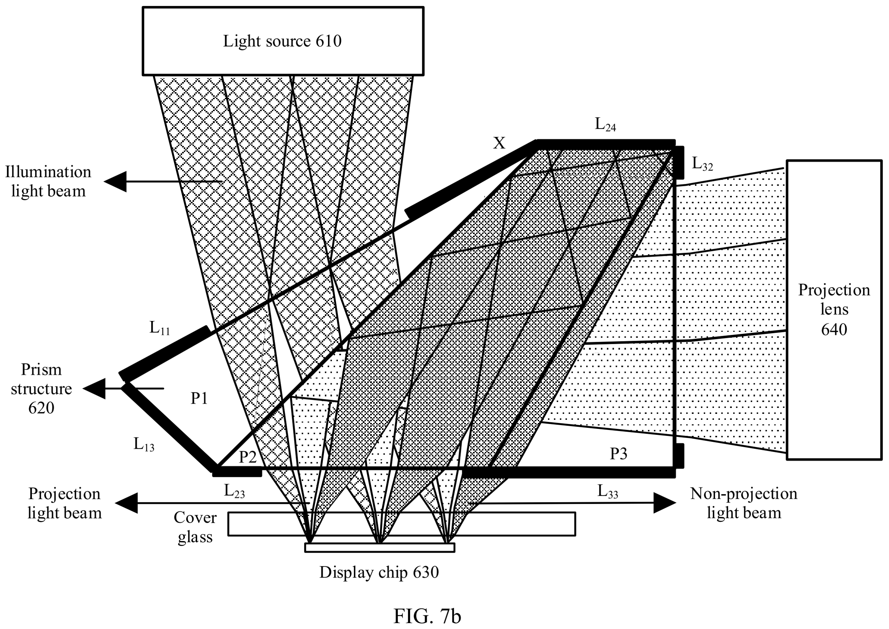

Alternatively, optionally, considering that the non-projection light beam reflected from the display chip 630 is a non-effective light beam for projection, in some implementations, a part of a surface that is on the third side surface $L_{23}$ of the quadrangular prism P2 and that is used to receive the non-projection light beam reflected from the display chip 630 but does not receive the illumination light beam and the projection light beam may be blackened. Refer to FIG. 7b. In this way, a part of the non-projection light beam reflected from the display chip 630 may be directly absorbed by the blackened part on the third side surface $L_{23}$ of the quadrangular prism P2, and does not enter the quadrangular prism P2. In this way, the non-projection light beam may be suppressed before being reflected into the quadrangular prism P2, and the non-projection light beam entering the prism structure 620 may be reduced, so that difficulty in eliminating the non-projection light beam in the prism structure 620 can be reduced.

4. A third side surface $L_{33}$ of the second triangular prism P3.

As shown in FIG. 7a, on the third side surface $L_{33}$ of the second triangular prism P3, surfaces other than a surface used to receive the non-projection light beam reflected from the display chip 630 may be considered as surfaces corresponding to the non-effective optical path, and these surfaces may be blackened.

Optionally, considering that the non-projection light beam reflected from the display chip 630 is a non-effective light beam for projection, the third side surface $L_{33}$ of the second triangular prism P3 receives only the reflected non-projection light beam, and there is no projection light beam irradiated onto the side surface, in some implementations, the entire third side surface $L_{33}$ of the second triangular prism P3 may be blackened directly. Refer to FIG. 7b. In this way, even if a part of the non-projection light beam reflected from the display chip 630 is not reflected to the third side surface $L_{23}$ of the quadrangular prism P2 but is reflected to the third side surface $L_{33}$ of the second triangular prism P3, the part may be directly absorbed by the blackened third side surface $L_{33}$ of the second triangular prism P3, and does not enter the second triangular prism P3. In this way, the non-projection light beam may be suppressed before being reflected into the second triangular prism P3, and the non-projection light beam entering the second triangular prism P3 may be reduced, so that difficulty in eliminating the non-projection light beam in the prism structure 620 can be reduced.

5. Second side surface $L_{32}$ of the second triangular prism P3.

As shown in FIG. 7a, on the second side surface $L_{32}$ of the second triangular prism P3, surfaces other than a surface used to guide out the projection light beam to the projection lens 640 may be considered as surfaces corresponding to the non-effective optical path, and these surfaces may be blackened. Optionally, because most positions of the second side surface need to be used to guide out the projection light beam, it may not be easy to find a position of the non-effective optical path part. Therefore, to reduce manufacturing difficulty, the surface may not be directly blackened.

In the foregoing implementation, all surfaces that are of the entire prism structure and through which no effective light beam passes are blackened, so that the non-effective light beam (for example, the non-projection light beam) projected onto these surfaces can be directly absorbed through these blackened surfaces, reflection or refraction of the non-effective light beam in the prism structure can be suppressed as much as possible, and a probability of generating stray light in the projection lens can be reduced.

III. Display chip

In a possible implementation, the display chip 630 may be configured to modulate an illumination light beam guided from the prism structure 620, to obtain image light that carries image information. Specifically, the display chip 630 may perform spatial phase modulation on the illumination light beam guided from the prism structure 620, to obtain a projection light beam and a non-projection light beam that have different emergent angles. Generally, the display chip 630 may include hundreds of thousands or even millions of micromirrors, and each micromirror corresponds to one pixel in an image. A greater quantity of micromirrors indicates higher resolution of an image loaded by the display chip 630. Currently, a commonly used display chip 630 may include but is not limited to a digital micromirror device (digital micromirror device, DMD), a liquid crystal display (liquid crystal display, LCD) chip, a liquid crystal on silicon (liquid crystal on silicon, LCOS) chip, or a laser beam scanning (laser beam scanning, LBS) display.

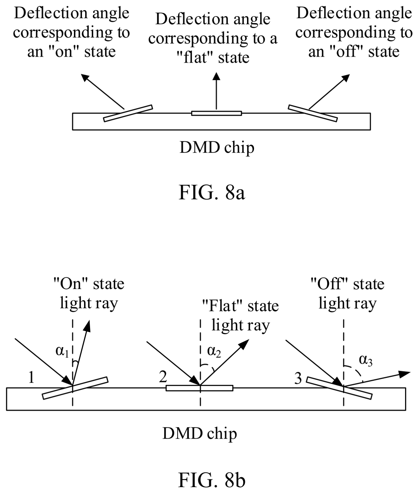

A DMD chip is used as an example. At a same moment, micromirrors on the DMD chip may be at different deflection angles. Different deflection angles correspond to different deflection states of the DMD chip, which may specifically include an "on" state, an "off" state, and a "flat" state. Specifically, for one frame of image, some regions are relatively bright, and some regions are relatively dark. A pixel whose brightness is greater than or equal to a brightness threshold on the image is referred to as a bright spot, and a pixel whose brightness is less than the brightness threshold on the image is referred to as a dark spot. Refer to FIG. 8a.

During image projection, the DMD chip configures a deflection angle of a micromirror corresponding to the bright spot to a deflection angle corresponding to the "on" state, and configures a deflection angle of a micromirror corresponding to the dark spot to a deflection angle corresponding to the "off" state. In addition, after one frame of image is projected and when a next frame of image is projected, a bright or dark region on the image may change, and consequently, a bright spot and a dark spot on the image change. It is possible that some originally bright spots may become dark spots, and some originally dark spots may become bright spots. In this case, the DMD chip switches, based on a change status of the bright spot and the dark spot, a deflection angle of a micromirror corresponding to a pixel that is originally a bright spot but is currently a dark spot from the deflection angle corresponding to the "on" state to the deflection angle corresponding to the "off" state, and switches a deflection angle of a micromirror corresponding to a pixel that is originally a dark spot but is currently a bright spot from the deflection angle corresponding to the "off" state to the deflection angle corresponding to the "on" state. Generally, the deflection angle corresponding to the "on" state and the deflection angle corresponding to the "off" state are opposite to each other relative to a plane on which the DMD chip is located. For example, still refer to FIG. 8a. It is assumed that the deflection angle corresponding to the "on" state is an angle obtained by rotating 12° counterclockwise relative to the plane on which the DMD chip is located, and the deflection angle corresponding to the "off" state is an angle obtained by rotating 12° clockwise relative to the plane on which the DMD chip is located. In this case, regardless of whether the deflection angle corresponding to the "on" state is switched to the deflection angle corresponding to the "off" state or the deflection angle corresponding to the "off" state is switched to the deflection angle corresponding to the "on" state, there is a lying state therebetween, and the lying state may be understood as a state in which a deflection angle is 0. The micromirror lies on the plane on which the DMD chip is located in this state, and this state is referred to as a "flat" state.

Further, refer to FIG. 8b. It is assumed that when a light ray (or a light beam) is incident to the DMD chip, a micromirror 1 on the DMD chip is at the deflection angle corresponding to the "on" state, a micromirror 2 is at the deflection angle corresponding to the "flat" state, and a micromirror 3 is at the deflection angle corresponding to the "off" state. In this case, the micromirror 1 reflects the incident light ray (or the light beam) at the deflection angle corresponding to the "on" state to form an "on" state light ray (or an "on" state light beam), the micromirror 2 reflects the incident light ray (or the light beam) at the deflection angle corresponding to the "flat" state to form a "flat" state light ray (or a "flat" state light beam), and the micromirror 3 reflects the incident light ray (or the light beam) at the deflection angle corresponding to the "off" state to form an "off" state light ray (or an "off" state light beam). The "on" state light beam is a light beam required for projection and is a projection light beam, and the "off" state light beam and the "flat" state light beam are light beams that are not required for projection and are non-projection light beams.

In addition, a light ray is used as an example. Because the "on" state light ray, the "flat" state light ray, and the "off" state light ray are obtained by reflecting light rays of a same incident angle off the micromirrors 1, 2, and 3 that are at different deflection angles, the light rays in the three states have different emergent angles relative to the plane on which the DMD chip is located. For example, still refer to FIG. 8b. Based on the deflection manner shown in the figure, the emergent angles of the light rays in the three states may satisfy the following relationship: an emergent angle $\alpha_1$ of the "on" state light ray<an emergent angle $\alpha_2$ of the "flat" state light ray<an emergent angle $\alpha_3$ of the "off" state light ray.

Based on the foregoing content, in a possible implementation, the projection light beam may include a light beam reflected from the display chip 630 at a first deflection angle, and the non-projection light beam may include a light beam reflected from the display chip 630 at a second deflection angle and a light beam reflected from the display chip 630 at a third deflection angle, where the first deflection angle, the second deflection angle, and the third deflection angle correspond to three different deflection states of the display chip 630. For example, the display chip 630 is a DMD chip. In an ideal state, it is expected that only a light beam corresponding to a bright spot can enter the projection lens for imaging, and a light beam other than the bright spot does not enter the projection lens for imaging. Therefore, the first deflection angle may be the deflection angle corresponding to the "on" state, the second deflection angle may be the deflection angle corresponding to the "flat" state, and the third deflection angle may be the deflection angle corresponding to the "off" state. In other words, the projection light beam may include the "on" state light beam, and the non-projection light beam may include the "off" state light beam and the "flat" state light beam.

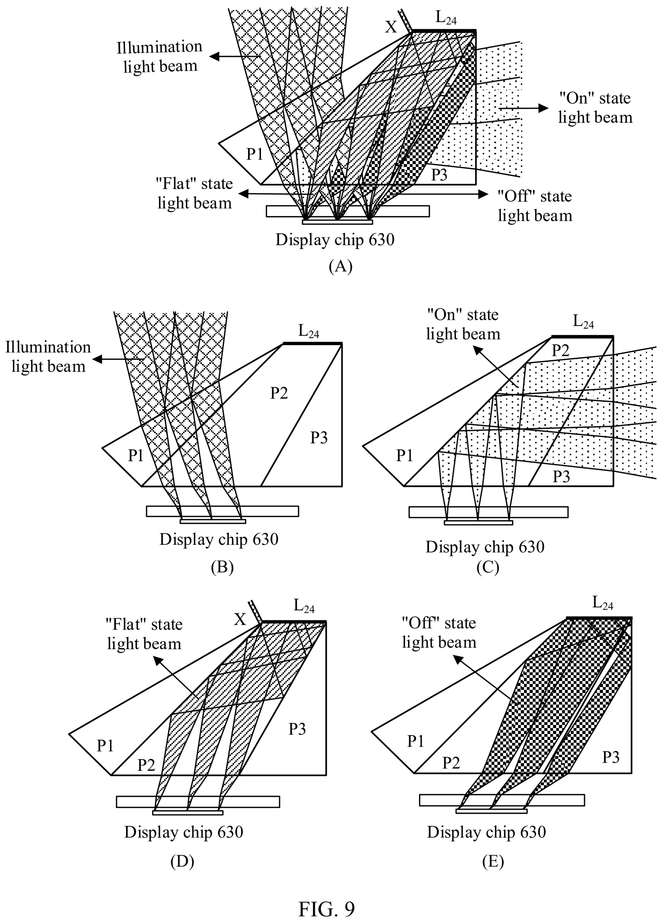

Further, the prism structure 620 may be configured to suppress the "off" state light beam and the "flat" state light beam. For example, FIG. 9 is an example of a diagram of a light beam transmission path according to this application is shown. (A) in FIG. 9 shows an overall transmission path of a light beam in each state, and (B) in FIG. 9 to (E) in FIG. 9 show respective transmission paths of light beams in states. Specifically, (B) in FIG. 9 shows a transmission path of the illumination light beam, (C) in FIG. 9 shows a transmission path of the "on" state light beam, (D) in FIG. 9 shows a transmission path of the "flat" state light beam, and (E) in FIG. 9 shows a transmission path of the "off" state light beam. The following describes in detail transmission paths of light beams in different states on the prism structure 620 and the display chip 630 with reference to (B) in FIG. 9 to (E) in FIG. 9.

First, refer to (B) in FIG. 9. The illumination light beam sequentially passes through the first triangular prism P1 and the quadrangular prism P2, and then is irradiated onto the display chip 630 at a specific incident angle. Specifically, the illumination light beam is first irradiated onto a first side surface of the first triangular prism P1, is refracted into the first triangular prism P1 from the first side surface of the first triangular prism P1, transmitted to a second side surface of the first triangular prism P1 in the first triangular prism P1, refracted out from the second side surface of the first triangular prism P1, refracted into the quadrangular prism P2 from a first side surface of the quadrangular prism P2 after passing through a thin air layer between the second side surface of the first triangular prism P1 and the first side surface of the quadrangular prism P2, transmitted to a third side surface of the quadrangular prism P2 in the quadrangular prism P2, refracted out from the third side surface of the quadrangular prism P2, and irradiated onto the display chip 630 after being transmitted through an intermediate air layer.

Second, refer to (C) in FIG. 9. On the display chip 630, the illumination light beam is reflected by a micromirror (not shown in the figure, and refer to FIG. 8b) at the deflection angle corresponding to "on" state to form the "on" state light beam. The "on" state light beam enters the triangular prism P3 after one or more reflections or one or more refractions in the quadrangular prism P2, and then is guided out to the projection lens 640 from a second side surface of the triangular prism P3. Optionally, based on the placement manner shown in the figure, the "on" state light beam reflected from the display chip 630 may be reflected to a third side surface of the quadrangular prism P2 in a vertical direction shown in the figure. That is, an emergent angle, on the display chip 630, of a central light ray in the "on" state light beam is 0. The "on" state light beam is refracted into the quadrangular prism P2 from the third side surface of the quadrangular prism P2, transmitted to the first side surface of the quadrangular prism P2 in the quadrangular prism P2, then totally reflected to a second side surface of the quadrangular prism P2 from the first side surface of the quadrangular prism P2, refracted out from the second side surface of the quadrangular prism P2, refracted into the second triangular prism P3 from a first side surface of the second triangular prism P3 after passing through a thin air layer between the second side surface of the quadrangular prism P2 and the first side surface of the second triangular prism P3, then transmitted to a second side surface of the second triangular prism P3 in the second triangular prism P3, refracted out from the second side surface of the second triangular prism P3, and emitted into the projection lens 640. It can be learned that in the optical path transmission path, the "on" state light beam reflected into the quadrangular prism P2 may be directly reflected into the second triangular prism P3 by the quadrangular prism P2, and then directly refracted into the projection lens 640 by the second triangular prism P3 This transmission manner can guide the "on" state light beam to the projection lens 640 through a short optical path, thereby helping reduce energy waste of the projection light beam.

Further, refer to (D) in FIG. 9. On the display chip 630, the illumination light beam is reflected by a micromirror (not shown in the figure, and refer to FIG. 8b) at the deflection angle corresponding to the "flat" state to form the "flat" state light beam. After one or more reflections or one or more refractions in the quadrangular prism P2, the "flat" state light beam is partially guided to a blackened fourth side surface $L_{24}$ of the quadrangular prism P2 for absorption, and is partially guided out from the prism structure 620 after being reflected to the first triangular prism P1. Optionally, based on the placement manner shown in the figure, the "flat" state light beam reflected from the display chip 630 may be reflected to the third side surface of the quadrangular prism P2 in the upper right direction shown in the figure. In other words, an emergent angle of the "flat" state light beam on the display chip 630 is greater than an emergent angle of the "on" state light beam on the display chip 630. The "flat" state light beam is refracted into the quadrangular prism P2 from the third side surface of the quadrangular prism P2. A large part of the "flat" state light beam (for example, two "flat" state light beams on the left side and a left part of the "flat" state light beam on the right side) is transmitted to the first side surface of the quadrangular prism P2 in the quadrangular prism P2, and a small part (for example, a right part of the "flat" state light beam on the right side) is directly transmitted to the fourth side surface $L_{24}$ of the quadrangular prism P2 in the quadrangular prism P2 for absorption. The "flat" state light beam refracted to the first side surface of the quadrangular prism P2 is totally reflected to the second side surface of the quadrangular prism P2 from the first side surface of the quadrangular prism P2, and then totally reflected on the second side surface of the quadrangular prism P2. A large part of the "flat" state light beam is reflected to the fourth side surface $L_{24}$ of the quadrangular prism P2 for absorption, and a small part is reflected back to the first side surface of the quadrangular prism P2, then refracted out from the first side surface of the quadrangular prism P2, refracted into the first triangular prism P1 from the second side surface of the first triangular prism P1 after passing through a thin air layer between the first side surface of the quadrangular prism P2 and the second side surface of the first triangular prism P1, transmitted to the first side surface of the first triangular prism P1 in the first triangular prism P1, and refracted out from the first side surface of the first triangular prism P1, as shown at an X position in the figure. It can be learned that, in the optical path transmission path, the "flat" state light beam reflected into the quadrangular prism P2 may be guided to the blackened surface for absorption or guided out from the prism structure through two reflections in the quadrangular prism P2, so that a transmission path from a moment at which the "flat" state light beam enters the quadrangular prism P2 to a moment at which the light beam is eliminated is short. This can reduce a probability of stray light introduced when the "flat" state light beam undergoes multiple reflections or refractions within the quadrangular prism P2.

Finally, refer to (E) in FIG. 9. On the display chip 630, the illumination light beam is reflected by a micromirror (not shown in the figure, and refer to FIG. 8b) at the deflection angle corresponding to the "off" state to form the "off" state light beam. The "off" state light beam is guided to the blackened fourth side surface $L_{24}$ of the quadrangular prism P2 for absorption after one or more reflections or one or more refractions in the quadrangular prism P2 and the second triangular prism P3. Optionally, based on the placement manner shown in the figure, the "off" state light beam reflected from the display chip 630 is also reflected to the third side surface of the quadrangular prism P2 in the upper right direction shown in the figure, and an emergent angle of the "off" state light beam on the display chip 630 is greater than an emergent angle of the "flat" state light beam on the display chip 630. A large part of the "off" state light beam (for example, two "off" state light beams on the left side) is refracted into the quadrangular prism P2 from the third side surface of the quadrangular prism P2, and a small part (for example, one "off" state light beam on the right side) is refracted into the second triangular prism P3 from the third side surface of the second triangular prism P3. A large part of the "off" state light beam (for example, a right part of one "off" state light beam on the left side and a left part of one "off" state light beam in the middle) entering the quadrangular prism P2 is directly transmitted to the fourth side surface $L_{24}$ of the quadrangular prism P2 for absorption, a small part (for example, a left part of one "off" state light beam on the left side) is transmitted to the first side surface of the quadrangular prism P2, and a small part (for example, a right part of one "off" state light beam in the middle) is transmitted to the second side surface of the quadrangular prism P2. The "off" state light beam transmitted to the first side surface of the quadrangular prism P2 is totally reflected on the first side surface, where a part is reflected to the second side surface of the quadrangular prism P2, and another part is reflected to the fourth side surface $L_{24}$ of the quadrangular prism P2 for absorption. After being incident into the second side surface of the quadrangular prism P2, the "off" state light beam reflected from the first side surface of the quadrangular prism P2 and the "off" state light beam refracted from the third side surface of the quadrangular prism P2 are totally reflected from the second side surface of the quadrangular prism P2 to the fourth side surface $L_{24}$ of the quadrangular prism P2 for absorption. In addition, a part of the "off" state light beam entering the second triangular prism P3 is directly transmitted to the second side surface of the second triangular prism P3, and another part is totally reflected to the second side surface of the second triangular prism P3 from the first side surface of the second triangular prism P3. The two parts of the "off" state light beam are totally reflected to the first side surface of the second triangular prism P3 from the second side surface of the second triangular prism P3, refracted out from the first side surface of the second triangular prism P3, refracted into the quadrangular prism P2 from the second side surface of the quadrangular prism P2 after passing through a thin air layer between the first side surface of the second triangular prism P3 and the second side surface of the quadrangular prism P2, and transmitted to the fourth side surface $L_{24}$ of the quadrangular prism P2 in the quadrangular prism P2 for absorption. It can be learned that in the optical path transmission path, the "off" state light beam reflected to the second triangular prism P3 may be guided to the blackened surface of the quadrangular prism P2 through one or two reflections in the second triangular prism P3, so that a transmission path from a moment at which the "off" state light beam enters the second triangular prism P3 to a moment at which the "off" state light beam is eliminated is short. This can reduce a probability of stray light introduced when the "off" state light beam undergoes multiple reflections or refractions within the second triangular prism P3.

It can be learned from the foregoing content that, by designing the optical system, both the "off" state light beam and the "flat" state light beam that are reflected from the display chip can be guided to the blackened surface for absorption or guided out from the prism structure through one or more reflections or refractions in the prism structure. In this way, suppressing both the "off" state light beam and the "flat" state light beam that are non-effective light beams can avoid forming of stray light as the "off" state light beam and the "flat" state light beam enter the projection lens in a large quantity, so that a relatively pure "on" state light beam enters the projection lens 640, and contrast of projection imaging is enhanced.

It should be noted that in the foregoing content, that the emergent angle of the "flat" state light beam on the display chip 630 is greater than the emergent angle of the "on" state light beam on the display chip 630, and the emergent angle of the "off" state light beam on the display chip 630 is greater than the emergent angle of the "flat" state light beam on the display chip 630 may be understood that an emergent angle of a "flat" state light ray with a minimum emergent angle in the "flat" state light beam on the display chip 630 is greater than an emergent angle of an "on" state light ray with a maximum emergent angle in the "on" state light beam on the display chip 630, and an emergent angle of an "off" state light ray with a minimum emergent angle in the "off" state light beam on the display chip 630 is greater than an emergent angle of a "flat" state light ray with a maximum emergent angle in the "flat" state light beam on the display chip 630. In this way, there may be no overlapping between angles at which the "on" state light beam, the "flat" state light beam, and the "off" state light beam are reflected from the display chip 630, and therefore there is a specific spacing between the three light beams, as shown in (A) in FIG. 9. It can be learned that the non-overlapping angle characteristic provides support for separating light beams in the three states through reflection or refraction in the prism structure 620.

In addition, based on the placement manner shown in FIG. 9, a relationship between incident angles of the "on" state light beam, the "flat" state light beam, and the "off" state light beam that are irradiated onto the second side surface of the quadrangular prism P2 after being totally reflected from the first side surface of the quadrangular prism P2 may be the same as a relationship between emergent angles of the "on" state light beam, the "flat" state light beam, and the "off" state light beam that are reflected from the display chip 430. To be specific, the incident angle of the "on" state light beam on the second side surface of the quadrangular prism P2 is less than the incident angle of the "flat" state light beam on the second side surface of the quadrangular prism P2, and the incident angle of the "flat" state light beam on the second side surface of the quadrangular prism P2 is less than the incident angle of the "off" state light beam on the second side surface of the quadrangular prism P2. In this way, a smaller incident angle of the "on" state light beam on the second side surface of the quadrangular prism P2 indicates a high probability that the incident angle is less than a critical angle for total reflection corresponding to the second side surface of the quadrangular prism P2, and therefore, it is more likely to refract the "on" state light beam on the second side surface of the quadrangular prism P2. In addition, greater the incident angles of the "off" state light beam and the "flat" state light beam on the second side surface of the quadrangular prism P2 indicate a high probability that the incident angles are greater than the critical angle for total reflection corresponding to the second side surface of the quadrangular prism P2, and therefore, it is more likely to totally reflect the "off" state light beam and the "flat" state light beam on the second side surface of the quadrangular prism P2. It can be learned that, by designing the optical system, the incident angle of the projection light beam on the second side surface of the quadrangular prism P2 is less than the incident angle of the non-projection light beam on the second side surface of the quadrangular prism P2. This helps separate the projection light beam from the non-projection light beam by using the critical angle for total reflection corresponding to the second side surface of the quadrangular prism P2.

Furthermore, to implement the optical path transmission path shown in FIG. 9 in the prism structure 620, the prism structure 620 further needs to have some other features, which are described in detail below.

In a possible implementation, still refer to FIG. 9. In the optical system, the first triangular prism P1, the quadrangular prism P2, and the second triangular prism P3 belong to an optically denser medium, and air belongs to an optically rarer medium. Therefore, when a light beam is incident from a side surface of any prism to air, the light beam is incident from the optically denser medium to the optically rarer medium, and the side surface corresponds to a critical angle for total reflection. For example, based on the optical path transmission path shown in FIG. 9, side surfaces corresponding to the critical angle for total reflection may include the following five side surfaces.

a1: Second side surface of the first triangular prism P1.

Specifically, refer to (B) in FIG. 9. The illumination light beam is refracted from the second side surface of the first triangular prism P1 into the air layer between the second side surface of the first triangular prism P1 and the first side surface of the quadrangular prism P2. In other words, the illumination light beam can pass through the second side surface of the first triangular prism P1 without being totally reflected by the second side surface. Therefore, based on the definition of total reflection in the foregoing term explanation part, it can be learned that an incident angle at which the illumination light beam is irradiated onto the second side surface of the first triangular prism P1 is less than the critical angle for total reflection corresponding to the second side surface of the first triangular prism P1. The critical angle for total reflection corresponding to the second side surface of the first triangular prism P1 is $\arcsin(\frac{n_{P0}}{n_{P12}})$, $n_{p0}$ is a refractive index of air, and $n_{p12}$ is a refractive index of a material near the second side surface of the first triangular prism P1.

a2: Third side surface of the quadrangular prism P2.

Specifically, refer to (B) in FIG. 9. The illumination light beam is emitted from the third side surface of the quadrangular prism P2 into air between the third side surface of the quadrangular prism P2 and the display chip 630. In other words, the illumination light beam can pass through the third side surface of the quadrangular prism P2 without being totally reflected by the third side surface. Therefore, based on the definition of total reflection in the foregoing term explanation part, it can be learned that an incident angle at which the illumination light beam is irradiated onto the third side surface of the quadrangular prism P2 is less than the critical angle for total reflection corresponding to the third side surface of the quadrangular prism P2.

The critical angle for total reflection corresponding to the third side surface of the quadrangular prism P2 is $\arcsin(\frac{n_{P0}}{n_{P23}})$, $n_{p0}$ is a refractive index of air, and $n_{p23}$ is a refractive index of a material near the third side surface of the quadrangular prism P2.

a3: First side surface of the quadrangular prism P2.

Specifically, refer to (C) in FIG. 9 to (E) in FIG. (9). A projection light beam (for example, the "on" state light beam) and a non-projection light beam (for example, the "flat" state light beam and the "off" state light beam)

that are reflected from the display chip 630 are totally reflected by the first side surface of the quadrangular prism P2. A large part of the non-projection light beam (referred to as a first part of the non-projection light beam) reflected from the second side surface of the quadrangular prism P2 is totally reflected by the first side surface of the quadrangular prism P2, and a small part of the non-projection light beam (referred to as a second part of the non-projection light beam) is reflected into the air layer between the first side surface of the quadrangular prism P2 and the second side surface of the first triangular prism P1 from the first side surface of the quadrangular prism P2. In other words, the first part of the non-projection light beam and all light beams reflected from the display chip 630 can be totally reflected by the first side surface of the quadrangular prism P2, and the second part of the non-projection light beam can pass through the first side surface of the quadrangular prism P2 without being totally reflected by the first side surface. Therefore, based on the definition of total reflection in the foregoing term explanation part, it can be learned that an incident angle at which the first part of the non-projection light beam and all light beams reflected from the display chip 630 are irradiated onto the first side surface of the quadrangular prism P2 is greater than or equal to the critical angle for total reflection corresponding to the first side surface of the quadrangular prism P2, and an incident angle at which the second part of the non-projection light beam is irradiated onto the first side surface of the quadrangular prism P2 is less than the critical angle for total reflection corresponding to the first side surface of the quadrangular prism P2.

The critical angle for total reflection corresponding to the first side surface of the quadrangular prism P2 is $\arcsin(\frac{n_{P0}}{n_{P21}})$, $n_{p0}$ is a refractive index of air, and $n_{p21}$ is a refractive index of a material near the first side surface of the quadrangular prism P2.

a4: Second side surface of the quadrangular prism P2.

Specifically, refer to (C) in FIG. 9 to (E) in FIG. 9. A projection light beam (for example, the "on" state light beam) reflected from the first side surface of the quadrangular prism P2 is refracted into the air layer between the second side surface of the quadrangular prism P2 and the first side surface of the second triangular prism P3 from the second side surface of the quadrangular prism P2, and a non-projection light beam (for example, the "flat" state light beam and the "off" state light beam) reflected from the first side surface of the quadrangular prism P2 is totally reflected by the second side surface of the quadrangular prism P2. In other words, the projection light beam can pass through the second side surface of the quadrangular prism P2 without being totally reflected by the second side surface, and the non-projection light beam is totally reflected by the second side surface of the quadrangular prism P2. Therefore, based on the definition of total reflection in the foregoing term explanation part, it can be learned that an incident angle at which the projection light beam is irradiated onto the second side surface of the quadrangular prism P2 is less than the critical angle for total reflection corresponding to the second side surface of the quadrangular prism P2, and an incident angle at which the non-projection light beam is irradiated onto the second side surface of the quadrangular prism P2 is greater than or equal to the critical angle for total reflection corresponding to the second side surface of the quadrangular prism P2.

The critical angle for total reflection corresponding to the second side surface of the quadrangular prism P2 is $\arcsin(\frac{n_{P0}}{n_{P22}})$, $n_{p0}$ is a refractive index of air, and $n_{p22}$ is a refractive index of a material near the second side surface of the quadrangular prism P2.

It may be understood that the projection light beam includes a plurality of projection light rays. That the incident angle at which the projection light beam is irradiated onto the second side surface of the quadrangular prism P2 is less than the critical angle for total reflection corresponding to the second side surface of the quadrangular prism P2 may be considered as that an incident angle at which a projection light ray with a maximum incident angle in the projection light beam is irradiated onto the second side surface of the quadrangular prism P2 is less than the critical angle for total reflection corresponding to the second side surface of the quadrangular prism P2. Similarly, the non-projection light beam includes a plurality of non-projection light rays. That the incident angle at which the non-projection light beam is irradiated onto the second side surface of the quadrangular prism P2 is greater than or equal to the critical angle for total reflection corresponding to the second side surface of the quadrangular prism P2 may be considered as that an incident angle at which a non-projection light ray with a minimum incident angle in the non-projection light beam is irradiated onto the second side surface of the quadrangular prism P2 is greater than or equal to the critical angle for total reflection corresponding to the second side surface of the quadrangular prism P2.

a5: Second side surface of the second triangular prism P3.

Specifically, refer to (C) in FIG. 9 and (E) in FIG. 9. A non-projection light beam (for example, the "off" state light beam) reflected from the display chip 630 is totally reflected by the second side surface of the second triangular prism P3, and a projection light beam (for example, the "on" state light beam) reflected from the second side surface of the quadrangular prism P2 is refracted to the projection lens 640 from the second side surface of the second triangular prism P3. In other words, the non-projection light beam can be totally reflected by the second side surface of the second triangular prism P3, and the projection light beam can pass through the second side surface of the second triangular prism P3 without being totally reflected by the second side surface. Therefore, based on the definition of total reflection in the foregoing term explanation part, it can be learned that an incident angle at which the non-projection light beam is irradiated onto the second side surface of the second triangular prism P3 is greater than or equal to the critical angle for total reflection corresponding to the second side surface of the second triangular prism P3, and an incident angle at which the projection light beam is irradiated onto the second side surface of the second triangular prism P3 is smaller than the critical angle for total reflection corresponding to the second side surface of the second triangular prism P3. The critical angle for total reflection corresponding to the second side surface of the second triangular prism P3 is $\arcsin(\frac{n_{P0}}{n_{P32}})$, $n_{p0}$ is a refractive index of air, and $n_{p32}$ is a refractive index of a material near the second side surface of the second triangular prism P3.

Further, in any remaining side surface other than the foregoing five side surfaces, a light beam is refracted from air to a corresponding prism through the side surface. For example, based on the optical path transmission path shown in FIG. 9, remaining side surfaces may include the following five side surfaces.

b1: first side surface of the first triangular prism P1.

Specifically, refer to (B) in FIG. 9. The illumination light beam transmitted in the air is refracted into the first triangular prism P1 from the first side surface of the first triangular prism P1. In other words, the illumination light beam can pass through the first side surface of the first triangular prism P1 without being totally reflected by the first side surface.

b2: First side surface of the quadrangular prism P2.

Specifically, refer to (B) in FIG. 9. The illumination light beam emitted from the second side surface of the first triangular prism P1 is refracted into the quadrangular prism from the first side surface of the quadrangular prism P2. In other words, the illumination light beam can pass through the first side surface of the quadrangular prism P2 without being totally reflected by the first side surface.

b3: Third side surface of the quadrangular prism P2.

Specifically, refer to (C) in FIG. 9 to (E) in FIG. 9. A projection light beam (for example, the "on" state light beam) and a non-projection light beam (for example, the "flat" state light beam and an "off" state light beam) that are reflected from the display chip 630 are refracted into the quadrangular prism from the third side surface of the quadrangular prism P2. In other words, the projection light beam and the non-projection light beam can pass through the third side surface of the quadrangular prism P2 without being totally reflected by the third side surface.

b4: First side surface of the second triangular prism P3.

Specifically, refer to (C) in FIG. 9. A projection light beam (for example, the "on" state light beam) reflected from the second side surface of the quadrangular prism P2 is refracted into the second triangular prism P3 from the first side surface of the second triangular prism P3. In other words, the projection light beam can pass through the first side surface of the second triangular prism P3 without being totally reflected by the first side surface.

b5: Third side surface of the second triangular prism P3.

Specifically, refer to (E) in FIG. 9. A non-projection light beam (for example, the "off" state light beam) reflected from the display chip 630 is refracted into the second triangular prism P3 from the third side surface of the second triangular prism P3. In other words, the non-projection light beam can pass through the third side surface of the second triangular prism P3 without being totally reflected by the third side surface.

It may be understood that a prism may be uniformly made of a same material. In this case, refractive indices of side surfaces of the prism are the same. For example, when the first triangular prism P1 is uniformly made of a same material integrally, a refractive index $n_{p11}$ of the first side surface of the first triangular prism P1, a refractive index $n_{p12}$ of the second side surface of the first triangular prism P1, and a refractive index $n_{p13}$ of the third side surface of the first triangular prism P1 in the foregoing content are all the same. A refractive index of any side surface of the first triangular prism P1 may also be referred to as a refractive index $n_{p1}$ of the first triangular prism P1. Correspondingly, when the quadrangular prism P2 is uniformly made of a same material integrally, a refractive index $n_{p21}$ of the first side surface of the quadrangular prism P2, a refractive index $n_{p22}$ of the second side surface of the quadrangular prism P2, and a refractive index $n_{p23}$ of the third side surface of the quadrangular prism P2 in the foregoing content are all the same. A refractive index of any side surface of the quadrangular prism P2 may also be referred to as a refractive index $n_{p2}$ of the quadrangular prism P2. In addition, when the second triangular prism P3 is uniformly made of a same material integrally, a refractive index $n_{p31}$ of the first side surface of the second triangular prism P3, a refractive index $n_{p32}$ of the second side surface of the second triangular prism P3, and a refractive index $n_{p33}$ of the third side surface of the second triangular prism P3 in the foregoing content are all the same. A refractive index of any side surface of the second triangular prism P3 may also be referred to as a refractive index $n_{p3}$ of the second triangular prism P3.

It may be understood that, based on the foregoing content, a transmission path of a light beam in each state in the prism structure 620 is related to a critical angle for total reflection corresponding to each prism side surface in the prism structure 620, and the critical angle for total reflection corresponding to the prism side surface is determined based on a refractive index of air and a refractive index of a material near the prism side surface, where the refractive index of the air is fixed. Therefore, it may be considered that the transmission path of the light beam in each state in the prism structure 620 is related to a refractive index of each prism side surface in the prism structure 620. Based on this, in an optional implementation, a material with a corresponding refractive index may be selected with reference to a light beam transmission path that needs to be implemented on any side surface of each prism, to make the side surface and a nearby material of the prism. For example, the second side surface of the quadrangular prism P2 is used as an example. First, an incident angle at which the projection light beam is irradiated onto the second side surface of the quadrangular prism P2 and an incident angle at which the non-projection light beam is irradiated onto the second side surface of the quadrangular prism P2 may be obtained through an experiment or calculation. Then, based on the content described in the part a4 that the incident angle at which the projection light beam is irradiated onto the second side surface is less than the critical angle for total reflection and the incident angle at which the non-projection light beam is irradiated onto the second side surface is greater than or equal to the critical angle for total reflection, a range of the critical angle for total reflection that can implement the function is determined. Then, based on an association relationship between the critical angle for total reflection, the refractive index of air, and the refractive index corresponding to the second side surface of the quadrangular prism P2 that are provided in the part a4, a range of the refractive index corresponding to the second side surface of the quadrangular prism P2 is calculated. Then, one or more materials whose refractive indices are within the range are selected to prepare the second side surface of the quadrangular prism P2 and a material near the second side surface, so that the prepared second side surface of the quadrangular prism P2 refracts the projection light beam and reflects the non-projection light beam. Alternatively, when materials of the prisms are consistent, a material with a corresponding refractive index may be selected based on a light beam transmission path that needs to be implemented on each side surface of each prism, to prepare the entire prism. For example, the quadrangular prism P2 is still used as an example. First, a refractive index range corresponding to each side surface of any prism may be calculated in the manner provided above, to separately three refractive index ranges: a refractive index range in which the first side surface of the quadrangular prism P2 refracts an illumination light beam, a refractive index range in which the second side surface of the quadrangular prism P2 reflects a projection light beam and a non-projection light beam, and a refractive index range in which the third side surface of the quadrangular prism P2 refracts a projection light beam and reflects a non-projection light beam. Then, one or more materials whose refractive index is within a common range of the three refractive index ranges are selected to prepare the entire quadrangular prism P2, so that the prepared quadrangular prism P2 meets a requirement of refracting or reflecting a light beam off each side surface.

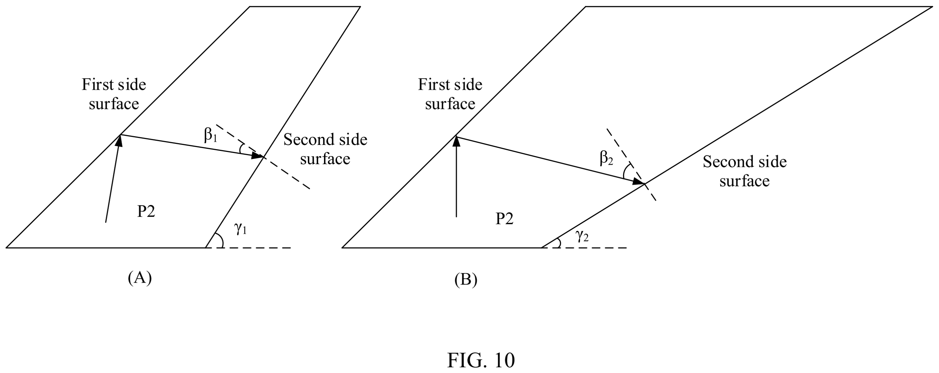

Optionally, transmission paths of light beams in the states in the prism structure 620 are further related to tilt angles of side surfaces of prisms in the prism structure 620. Therefore, the tilt angles of the side surfaces of the prisms may be designed with reference to the transmission paths of the light beams in the states in the prism structure 620. It may be understood that, for a same incident beam, a greater tilt angle of a side surface indicates a greater incident angle at which the incident beam is irradiated onto the side surface. For example, the second side surface of the quadrangular prism P2 is still used as an example. FIG. 10 is a diagram of an example in which a same light ray is irradiated to a second side surface at different tilt angles according to this application. When the tilt angle of the second side surface of the quadrangular prism P2 is $\gamma_1$ shown in (A) in FIG. 10, an incident angle at which a light ray reflected from the first side surface of the quadrangular prism P2 is irradiated onto the second side surface of the quadrangular prism P2 is $\beta_1$. However, when the tilt angle of the second side surface of the quadrangular prism P2 is reduced to $\gamma_2$ shown in (B) in FIG. 10, an incident angle at which the same light ray is irradiated onto the second side surface of the quadrangular prism P2 is increased to $\beta_2$. It can be learned that, as the tilt angle of the second side surface of the quadrangular prism P2 increases, the incident angle at which the same light ray is irradiated onto the second side surface of the quadrangular prism P2 increases accordingly, and a probability that the incident angle exceeds a critical angle for total reflection corresponding to the second side surface of the quadrangular prism P2 increases accordingly. Therefore, a probability that the light ray is totally reflected by the second side surface of the quadrangular prism P2 without being refracted also increases. Therefore, when the second side surface of the quadrangular prism P2 is designed, a corresponding tilt angle of the second side surface of the quadrangular prism P2 may be selected with reference to an incident angle at which each light beam is irradiated onto the second side surface of the quadrangular prism P2, the critical angle for total reflection corresponding to the second side surface of the quadrangular prism P2, and a reflection or refraction path of each light beam on the second side surface of the quadrangular prism P2. For example, in a possible implementation, an incident angle at which a corresponding projection light beam is irradiated onto the second side surface, at each tilt angle, of the quadrangular prism P2 and an incident angle at which a non-projection light beam is irradiated onto the second side surface, at each tilt angle, of the quadrangular prism P2 may be first tested through an experiment. Then, a tilt angle at which an incident angle of the projection light beam is smaller than the critical angle for total reflection corresponding to the second side surface of the quadrangular prism P2 and an incident angle of the non-projection light beam is greater than or equal to the critical angle for total reflection corresponding to the second side surface of the quadrangular prism P2 is selected from different tilt angles. Then, a tilt angle is selected from the tilt angles that meet the condition as the tilt angle of the second side surface of the quadrangular prism. The selected tilt angle may be randomly selected, or may be a medium angle value among tilt angles whose angle values meet the condition, or may be an angle value that is the smallest or the largest in the tilt angles whose angle values meet the condition, or the like. This is not specifically limited.

In a possible implementation, a refractive index of the quadrangular prism P2 is the same as a refractive index of the second triangular prism P3. For example, still refer to (C) in FIG. 9. The "on" state light beam sequentially passes through the second side surface of the quadrangular prism P2, air, and the first side surface of the second triangular prism P3 to enter the second triangular prism P3. Because the refractive index of the quadrangular prism P2 is the same as the refractive index of the second triangular prism P3, it is equivalent to that the "on" state light beam is refracted into the air at the refractive index from the second side surface of the quadrangular prism P2, and then refracted into the first side surface of the second triangular prism P3 at the same refractive index from the air in a reverse direction. Therefore, a direction in which the "on" state light beam is refracted into the second triangular prism P3 may be kept consistent with a direction in which the "on" state light beam is emitted from the quadrangular prism P2. In this way, the second side surface of the quadrangular prism P2 and the first side surface of the second triangular prism P3 that are attached to each other are equivalent to transparent glass for transmission of the "on" state light beam, and may be used to keep a main transmission direction of the "on" state light beam unchanged.

It should be noted that a refractive index of the first triangular prism P1 may be the same as the refractive indices of the quadrangular prism P2 and the second triangular prism P3, or may be different from the refractive indices of the quadrangular prism P2 and the second triangular prism P3. This is not specifically limited.

In addition, FIG. 9 is merely an example of describing a possible optical path transmission manner, and another optical path transmission manner may be presented in an actual optical system. For example, when a placement position of the display chip 630 changes, a position and angle relationship between a projection light beam and a non-projection light beam that are reflected from the display chip 630 into the prism structure 620 may change accordingly. However, as long as the prism structure 620 is designed, the non-projection light beam reflected from the display chip 630 can be guided out to a blackened surface for absorption or guided out from the prism structure 620 through one or more reflections or refractions in the prism structure 620, and the projection light beam reflected from the display chip 630 can be guided out to the projection lens 640 through one or more reflections or refractions in the prism structure 620, the optical system is within the protection scope of this application. This is not specifically limited in this application.

IV. Projection lens

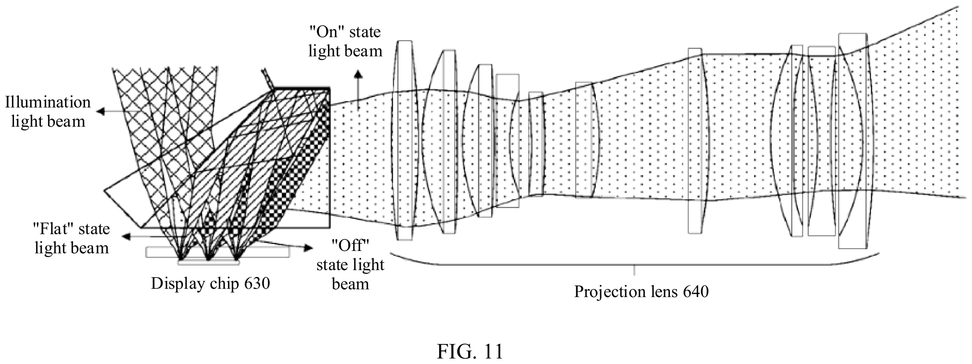

Optionally, the projection lens 640 may be configured to diverge a projection light beam from the prism structure 620 to implement image magnification. The projection lens 640 may include one or more lens elements. For example, FIG. 11 is a diagram of a structure of a projection lens. In this example, the projection lens 640 includes 10 lens elements. However, a specific quantity of lens elements may be set based on a projection requirement in an actual scenario. For example, if a requirement for projection definition is high and a requirement for a projection field of view angle is large, a large quantity of lens elements may be configured in the projection lens. If a requirement for projection definition is low and a requirement for a projection field of view angle is low, a small quantity of lens elements may be configured in the projection lens.

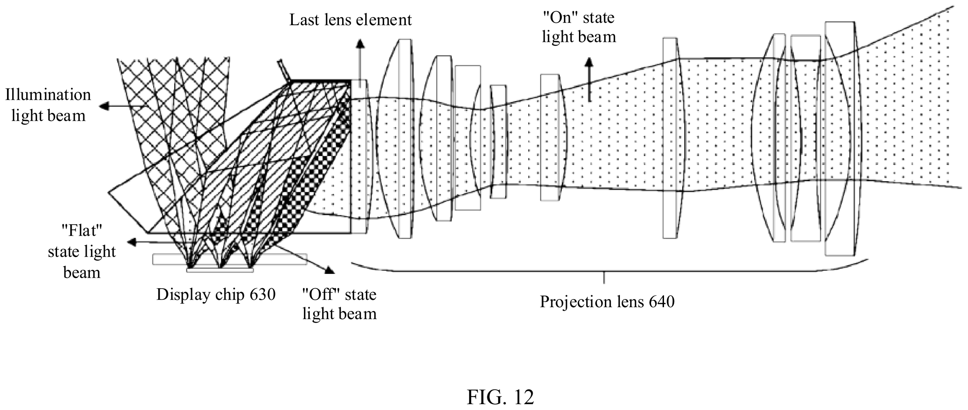

In an optional implementation, to reduce a volume of the optical system, a lens element that is in the projection lens 640 and that is closest to the prism structure 620 may be fastened to or integrated with the prism structure 620. The lens element that is in the projection lens 640 and that is closest to the prism structure 620 is also referred to as a last lens element of the projection lens 640. Specifically, the lens element may be a lens element that is in the projection lens 640 and that is closest to the second triangular prism P3. The lens element may be fastened to or integrated with the second triangular prism P3. For example, refer to FIG. 12. In a manner, the last lens element may be pasted to a third side surface of the second triangular prism P3. Alternatively, in another manner, a first side surface, a third side surface, a first main surface, and a second main surface of the second triangular prism P3 may be prepared on a piece of glass, and the remaining surface may be prepared into a right side surface of the last lens element shown in the figure.

In a further optional implementation, still refer to FIG. 12. When the second triangular prism P3 is fastened to the last lens element, one surface that is of the last lens element and that is opposite to the second triangular prism P3 may be set as a plane. For example, the left side surface of the last lens element shown in the figure may be controlled as a plane, and specifically, may be controlled as a plane that is parallel to and has a same size as the third side surface (namely, the right side surface shown in the figure) of the second triangular prism P3. In this way, when the second triangular prism P3 is fastened to the last lens element, the right side surface of the last lens element shown in the figure may be directly attached to the left side surface of the second triangular prism P3 shown in the figure, and bonded to the left side surface of the second triangular prism P3 by using glue, so that the second triangular prism P3 and the last lens element can be fastened easier.

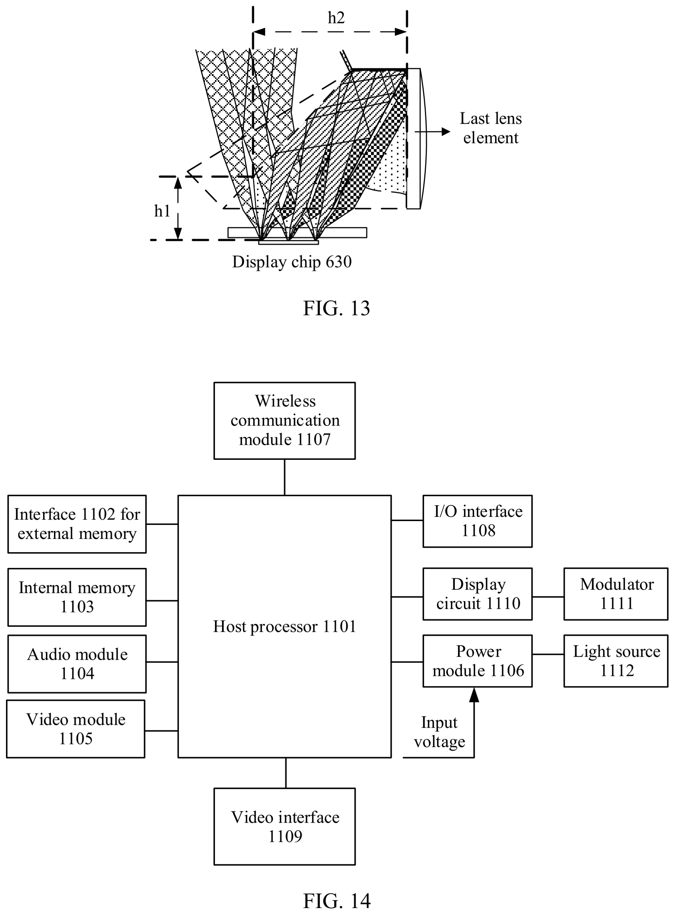

It may be understood that a back focal distance of the optical system is a distance at which a projection light beam is transmitted from a plane on which the display chip 630 is located to the last lens element of the projection lens 640. For example, refer to FIG. 13. The back focal distance may be specifically a sum of a distance h1 at which the projection light beam is reflected from the plane on which the display chip 630 is located to a second side surface of the quadrangular prism P2, a distance h2 at which the projection light beam is transmitted from the second side surface of the quadrangular prism P2 to a second side surface of the second triangular prism P3, and a distance at which the projection light beam is transmitted from the second side surface of the second triangular prism P3 to the last lens element of the projection lens 640. When the last lens element is fastened to or integrated with the second triangular prism P3, the distance at which the projection light beam is transmitted from the second side surface of the second triangular prism P3 to the last lens element of the projection lens 640 is zero. Compared with a solution in which the last lens element is not fastened to or integrated with the second triangular prism P3, this manner can reduce the back focal distance of the optical system, thereby reducing design difficulty of a back focal system.

The foregoing content describes transmission paths of different light beams in the optical system including the prism structure. It should be understood that, in addition to the prism structure, the optical system may further include another structure. For example, in some embodiments, the optical system may further include one or more lens elements. The one or more lens elements may be configured to homogenize an illumination light beam emitted from the light source 610, so that energy of the illumination light beam can be uniformly distributed on the display chip 630.

In addition, the light beam mentioned in this application is a set of light including a plurality of light rays. The plurality of light rays may be uniformly distributed, or may be non-uniformly distributed. Although light beams are represented in a form of uniform distribution in many accompanying drawings of this application, this is merely for ease of presentation, and does not constitute a limited solution of this application.

Based on the structure and functional principles of the prism structure and the optical system described above, this application further provides an optical display apparatus. The optical display apparatus may include the optical system in any one of the foregoing embodiments, and may further include a display chip and a projection lens, for example, the display chip 630 and the projection lens 640 described above. The display chip may be configured to reflect, at different deflection angles, an illumination light beam guided from the prism structure. The projection lens may be configured to project an enlarged image based on a projection light beam guided from the prism structure.

In a possible implementation, the optical display apparatus may further include a light source, for example, the light source 610 in FIG. 6. The light source is configured to emit an illumination light beam to the prism structure 610. Specifically, the illumination light beam may be emitted to the first side surface of the first triangular prism P1.

In a possible implementation, the optical display apparatus may further include a display. The display may be configured to display an enlarged image from the projection lens. The display is usually a screen that emits light without a backlight source, and is configured to: receive an external light ray and display an image. Specifically, the display may be a display screen or a screen for displaying, for example, a movie screen. Alternatively, the display may further have a backlight source, and may be further configured to: receive a light ray from the outside and display an image. In this case, the display may be a liquid-crystal display (liquid-crystal display, LCD), a light-emitting diode (light-emitting diode, LED) display, an organic light-emitting diode (organic light-emitting diode, OLED) display, a micro light-emitting diode (micro light-emitting diode, micro LED) display, or the like.

It may be understood that the optical display apparatus may further include another possible structure. This is not limited in this application. For example, FIG. 14 is a diagram of a circuit of an optical display apparatus according to this application. The circuit of the optical display apparatus mainly includes a host processor (host CPU) 1101, an interface 1102 for external memory, an internal memory 1103, an audio module 1104, a video module 1105, a power module 1106, a wireless communication module 1107, an I/O interface 1108, a video interface 1109, a display circuit 1110, a modulator 1111, a light source 1112, and the like. The host processor 1101 and components around the host processor 1101 such as the interface 1102 for external memory, the internal memory 1103, the audio module 1104, the video module 1105, the power module 1106, the wireless communication module 1107, the I/O interface 1108, the video interface 1109, and the display circuit 1110 may be connected to each other through a bus. The host processor 1101 is also referred to as a front-end processor.

In addition, the circuit schematic in this embodiment of this application does not constitute a specific limitation on the optical display apparatus. In some other embodiments of this application, the optical display apparatus may include more or fewer components than those shown in the figure, or some components may be combined, or some components may be split, or there may be a different component layout. The components shown in the figure may be implemented by hardware, software, or a combination of software and hardware.

The host processor 1101 includes one or more processing units. For example, the host processor 1101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The interface 1102 for external memory may be configured to connect to an external memory card, for example, a micro SD card, to extend a storage capability of the optical display apparatus. The external memory card communicates with the host processor 1101 through the interface 1102 for external memory, to implement a data storage function.

The internal memory 1103 may be configured to store computer-executable program code, and the executable program code includes instructions. The internal memory 1103 may include a program storage area and a data storage area. The program storage area may store an operating system, an application required by at least one function (for example, a call function or a time setting function), and the like. The data storage area may store data (such as a phone book and world time) created in a process of using the optical display apparatus, and the like. In addition, the internal memory 1103 may include a high-speed random access memory, and may further include a non-volatile memory, for example, at least one magnetic disk storage device, a flash memory device, and a universal flash storage (Universal Flash Storage, UFS). The host processor 1101 runs the instructions stored in the internal memory 1103 and/or the instructions stored in the memory disposed in the host processor 1101, to execute various function applications of the optical display apparatus and data processing.

In some embodiments, the optical display apparatus may further include a plurality of input/output (Input/Output, I/O) interfaces 1108 connected to the host processor 1101, for example, an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface. The I/O interface 1108 may be connected to an audio module like a mouse, a touchpad, a keyboard, a camera, a speaker/loudspeaker, or a microphone, or may be connected to a physical button (for example, a volume button, a brightness adjustment button, or a power button) on the optical display apparatus.

The audio module 1104 is configured to convert digital audio information into an analog audio signal for output, and is also configured to convert an analog audio input into a digital audio signal. The audio module 1104 may be further configured to: encode and decode audio signals, for example, perform voice playing or voice recording. In some embodiments, the audio module 1104 may be disposed in the processor 1101, or some functional modules in the audio module 1104 are disposed in the processor 1101. The optical display apparatus may implement an audio function through the audio module 1104 and an application processor, for example, music playing and calling.

The video interface 1109 may receive an audio and video signal input externally, and may be specifically a high-definition multimedia interface (high-definition multimedia interface, HDMI), a digital visual interface (digital visual interface, DVI), a video graphics array (video graphics array, VGA), a display port (display port, DP), or the like. The video interface 1109 may alternatively output a video. When the optical display apparatus is used as a head-up display, the video interface 1109 may receive a speed signal and a power signal that are input by a nearby device, and may further receive an AR video signal input externally. When the optical display apparatus is used as a projector, the video interface 1109 may receive a video signal input by an external computer or a terminal device.

The video module 1105 may decode a video input by the video interface 1109, for example, perform H.264 decoding. The video module may further encode a video collected by the optical display apparatus, for example, perform H.264 encoding on a video collected by an external camera. In addition, the host processor 1101 may also decode a video input through the video interface 1109, and then output an image signal obtained through decoding to the display circuit 1110.

The display circuit 1110 and the modulator 1111 are configured to display a corresponding image. Herein, the projection lens and the display in any one of the foregoing embodiments may be located in the display circuit 1110, and the prism structure and the display chip in any one of the foregoing embodiments may be located in the modulator 1111. In this embodiment, the video interface 1109 receives a video source signal input externally, the video module 1105 performs decoding and/or digitization processing and outputs one or more image signals to the display circuit 1110, and the display circuit 1110 drives, based on the input image signal, the modulator 1111 to perform projection imaging on incident light beam, to output projection image light. In addition, the host processor 1101 may also output the one or more image signals to the display circuit 1110.

The power module 1106 is configured to supply power to the host processor 1101 and a light source 1112 based on input power (for example, a direct current). The power module 1106 may include a rechargeable battery, and the rechargeable battery may supply power to the host processor 1101 and the light source 1112. Light emitted by the light source 1112 may be transmitted to the modulator (or referred to as an image source) 1111 for imaging, to form image light. Herein, the light source 1112 may be the light source module in any one of the foregoing embodiments.

The wireless communication module 1107 may enable the optical display apparatus to perform wireless communication externally, and may provide a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like. The wireless communication module 1107 may be one or more components integrating at least one communication processor module. The wireless communication module 1107 receives an electromagnetic wave through an antenna, performs frequency modulation and filtering processing on an electromagnetic wave signal, and sends a processed signal to the host processor 1101. The wireless communication module 1107 may further receive a to-be-sent signal from the host processor 1101, perform frequency modulation and amplification on the signal, and convert a processed signal into an electromagnetic wave for radiation through the antenna.

In addition, in addition to being input through the video interface 1109, video data decoded by the video module 1105 may alternatively be received in a wireless manner through the wireless communication module 1107 or be read from the external memory. For example, the optical display apparatus may receive video data from a terminal device or an in-vehicle entertainment system through a wireless local area network in a vehicle, and the optical display apparatus may further read audio and video data stored in the external memory.

For example, the optical display apparatus may include but is not limited to a HUD, a projector, an AR device, a VR device, an MR device, or the like. The AR device may include but is not limited to AR glasses or an AR helmet, the VR device may include but is not limited to VR glasses or a VR helmet, and the MR device may include but is not limited to MR glasses or an MR helmet.

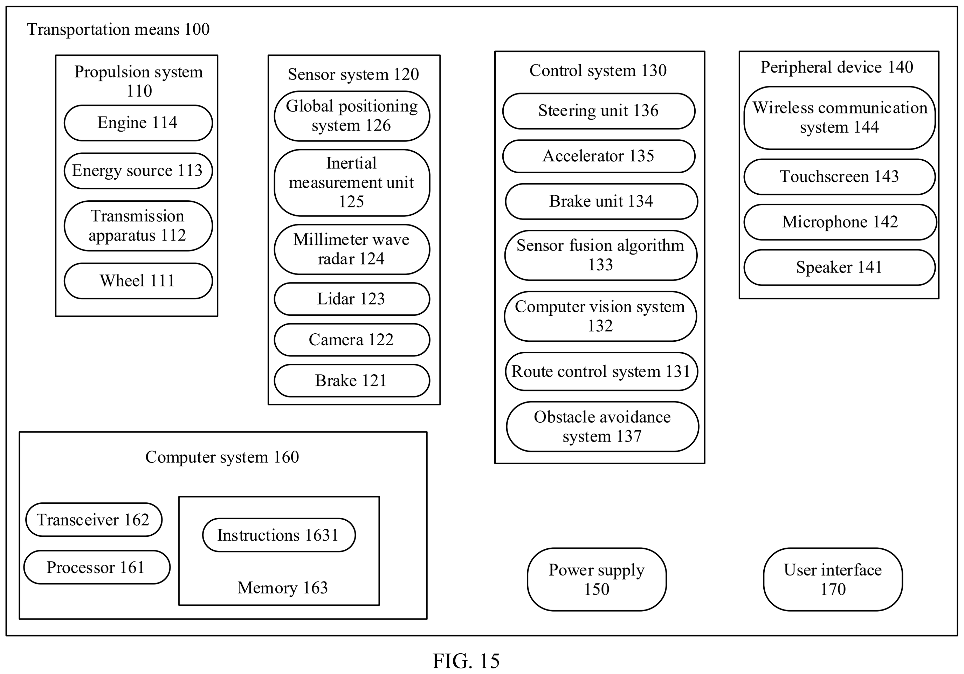

Based on the structure and the functional principle of the optical display apparatus described above, this application may further provide a transportation means. The transportation means may include the optical display apparatus in any one of the foregoing embodiments. FIG. 15 is a diagram of a possible functional framework of a transportation means according to this application. Optionally, one or more of the foregoing components may be separately installed or associated with the transportation means 100. For example, the memory 163 may exist partially or completely separated from the transportation means 100. The foregoing components may be communicatively coupled together in a wired and/or wireless manner.

It should be noted that the functional framework of the transportation means provided in FIG. 15 is merely an example. In another example, the transportation means 100 may include more, fewer, or different systems, and each system may include more, fewer, or different components. In addition, the shown systems and components may be combined or split in any manner. This is not specifically limited in this application.

The foregoing transportation means 100 may be a car, a truck, a motorcycle, a bus, a ship, an airplane, a helicopter, a lawn mower, a recreational vehicle, a playground vehicle, construction equipment, an electric vehicle, a golf cart, a train, a handcart, or the like. This is not limited in this application.

In this application, at least one means one or more, and a plurality of means two or more. "And/or" describes an association relationship between associated objects, and indicates that three relationships may exist. For example, A and/or B may indicate the following cases: A exists alone, both A and B exist, and B exists alone, where A and B may be singular or plural. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural. In text descriptions of this application, the character "/" generally indicates an "or" relationship between associated objects. In a formula of this application, the character "/" indicates a "division" relationship between associated objects. In addition, in this application, the term "for example" indicates giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that various numbers in this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. The terms "first", "second", and the like are used to distinguish between similar objects without having to describe a specific order or sequence. In addition, the terms "include", "have", or any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

**Claims**

1. A prism structure, comprising:

   a first triangular prism, a quadrangular prism, and a second triangular prism, wherein the first triangular prism comprises three quadrangular side surfaces and two triangular main surfaces, the quadrangular prism comprises four quadrangular side surfaces and two quadrangular main surfaces, and the second triangular prism comprises three quadrangular side surfaces and two triangular main surfaces; a second side surface of the first triangular prism is attached to a first side surface of the quadrangular prism, a second side surface of the quadrangular prism is attached to a first side surface of the second triangular prism, and a fourth side surface of the quadrangular prism is blackened; and the first side surface of the quadrangular prism and the second side surface of the quadrangular prism are two opposite surfaces, and the fourth side surface of the quadrangular prism is a surface that is connected to the first side surface of the quadrangular prism and the second side surface of the quadrangular prism and that is opposite to a third side surface of the second triangular prism.

2. An optical system, comprising a prism structure, wherein a display chip is placed in a first direction of the prism structure, a projection lens is placed in a second direction of the prism structure, the prism structure comprises a first layer, a second layer, and a third layer that are sequentially stacked in the second direction, and a fourth side surface that is of the second layer and that is in an opposite direction of the first direction is blackened;

   the first layer is configured to guide an illumination light beam into the second layer or guide out a non-projection light beam; the second layer is configured to: guide the illumination light beam into the display chip, reflect a projection light beam reflected from the display chip to the third layer, and guide a non-projection light beam reflected from the display chip to the fourth side surface, or guide out a non-projection light beam reflected from the display chip to the first layer; and the third layer is configured to guide the projection light beam into the projection lens.

3. The optical system according to claim 2, wherein the third layer is further configured to reflect the non-projection light beam reflected from the display chip to the fourth side surface.

4. The optical system according to claim 2 or 3, wherein

   the projection light beam comprises a light beam reflected from the display chip at a first deflection angle; and the non-projection light beam comprises a light beam reflected from the display chip at a second deflection angle and a light beam reflected from the display chip at a third deflection angle, wherein different deflection angles correspond to different states of the display chip.

5. The optical system according to any one of claims 2 to 4, wherein the prism structure is the prism structure according to claim 1, the first layer is the first triangular prism, the second layer is the quadrangular prism, the third layer is the second triangular prism, the display chip is placed on an outer side of a third side surface of the quadrangular prism, and the projection lens is placed on an outer side of a second side surface of the second triangular prism.

6. The optical system according to claim 5, wherein an included angle between the first side surface of the quadrangular prism and the third side surface of the quadrangular prism is 45°.

7. The optical system according to claim 5 or 6, wherein the second side surface of the second triangular prism is perpendicular to the third side surface of the second triangular prism.

8. The optical system according to any one of claims 5 to 7, wherein the third side surface of the quadrangular prism and the third side surface of the second triangular prism are located on a same plane, and the display chip is located below the plane.

9. The optical system according to any one of claims 5 to 8, wherein the fourth side surface of the quadrangular prism is parallel to the third side surface of the quadrangular prism, and an area of the fourth side surface of the quadrangular prism is less than an area of the third side surface of the quadrangular prism.

10. The optical system according to any one of claims 5 to 9, wherein a part of the non-projection light beam reflected from the display chip undergoes one or more reflections within the quadrangular prism, a part of the non-projection light beam is guided to the fourth side surface of the quadrangular prism, and a part of the non-projection light beam is guided out of the prism structure after being reflected to the first triangular prism.

11. The optical system according to claim 10, wherein another part of the non-projection light beam reflected from the display chip is refracted to the fourth side surface of the quadrangular prism through the third side surface of the quadrangular prism.

12. The optical system according to claim 10 or 11, wherein still another part of the non-projection light beam reflected from the display chip is reflected to the fourth side surface of the quadrangular prism through the second side surface of the second triangular prism.

13. The optical system according to any one of claims 5 to 12, wherein the projection light beam reflected from the display chip is reflected to the second side surface of the quadrangular prism through the first side surface of the quadrangular prism, is refracted to the second side surface of the second triangular prism from the second side surface of the quadrangular prism, and is guided out to the projection lens from the second side surface of the second triangular prism.

14. The optical system according to claim 13, wherein the non-projection light beam reflected from the display chip is reflected to the second side surface of the quadrangular prism through the first side surface of the quadrangular prism, and is reflected to the fourth side surface of the quadrangular prism from the second side surface of the quadrangular prism.

15. The optical system according to claim 14, wherein an incident angle of the projection light beam on the second side surface of the quadrangular prism is less than an incident angle of the non-projection light beam on the second side surface of the quadrangular prism.

16. The optical system according to claim 13 or 14, wherein a tilt angle of the second side surface of the quadrangular prism and a refractive index of a material of the quadrangular prism are selected such that the projection light beam is transmitted on the second side surface of the quadrangular prism and the non-projection light beam is reflected from the second side surface of the quadrangular prism.

17. The optical system according to any one of claims 13 to 16, wherein an incident angle, on the second side surface of the quadrangular prism, of a projection light ray having a maximum incident angle in the projection light beam is less than a critical angle for total reflection corresponding to the second side surface of the quadrangular prism, and an incident angle, on the second side surface of the quadrangular prism, of a projection light ray having a minimum incident angle in the non-projection light beam is greater than or equal to the critical angle for total reflection corresponding to the second side surface of the quadrangular prism.

18. The optical system according to any one of claims 5 to 17, wherein the refractive index of the material of the quadrangular prism is the same as a refractive index of a material of the second triangular prism.

19. The optical system according to any one of claims 5 to 18, wherein a non-effective optical path part of one or more outer surfaces of the prism structure other than the fourth side surface of the quadrangular prism is blackened.

20. The optical system according to any one of claims 5 to 19, wherein the second triangular prism is fastened to or integrated with a lens element that is closest to the second triangular prism and that is in the projection lens.

21. The optical system according to claim 20, wherein when the second triangular prism is fastened to the lens element, a side that is of the lens element and that is opposite to the second triangular prism is disposed as a plane.

22. An optical display apparatus, comprising a display chip, a projection lens, and the optical system according to any one of claims 2 to 21, wherein

the display chip is configured to reflect, at different deflection angles, an illumination light beam guided from the second layer; and
the projection lens is configured to project an enlarged image based on a projection light beam guided from the third layer.

23. The optical display apparatus according to claim 22, further comprising a light source, wherein
the light source is configured to emit an illumination light beam to the third layer.

24. The optical display apparatus according to claim 22 or 23, further comprising a display, wherein
the display is configured to display an enlarged image from the projection lens.

**25.** A terminal device, comprising the optical display apparatus according to any one of claims 22 to 24.

Optically rarer
medium

Optically denser
medium

$\theta_1$

FIG. 1

Projection
screen

Projector

FIG. 2a

FIG. 2b

HUD virtual image

Road surface

Windshield

Head-up display apparatus (HUD)

Eye box

FIG. 2c

FIG. 2d

Optical display apparatus 300

FIG. 3a

FIG. 3b

FIG. 3c

FIG. 3d

FIG. 3e

FIG. 4

FIG. 5

Light source 610

Illumination light beam

Projection lens 640

Prism structure 620

$L_{24}$

X

Q1

Q2

Q3

Cover glass

Projection light beam

Non-projection light beam

Display chip 630

**FIG. 6**

Light source 610

Illumination light beam

$L_{24}$

X

$L_{32}$

$L_{11}$

Prism structure 620

Projection lens 640

P1

$L_{13}$

P2

P3

$L_{23}$

$L_{33}$

Projection light beam

Non-projection light beam

Cover glass

Display chip 630

FIG. 7a

EP 4 741 886 A1

Light source 610

Illumination light beam

$L_{24}$

X

$L_{32}$

$L_{11}$

Projection lens 640

Prism structure 620

P1

$L_{13}$

P2

P3

$L_{23}$

$L_{33}$

Projection light beam

Cover glass

Non-projection light beam

Display chip 630

FIG. 7b

EP 4 741 886 A1

Deflection angle corresponding to an "on" state    Deflection angle corresponding to a "flat" state    Deflection angle corresponding to an "off" state

DMD chip

FIG. 8a

"On" state light ray    "Flat" state light ray    "Off" state light ray

1    2    3

$\alpha_1$    $\alpha_2$    $\alpha_3$

DMD chip

FIG. 8b

Illumination light beam

"On" state light beam

"Flat" state light beam

"Off" state light beam

Display chip 630

(A)

Illumination light beam

L₂₄

P1 P2 P3

Display chip 630

(B)

"On" state light beam

L₂₄

P1 P2 P3

Display chip 630

(C)

"Flat" state light beam

X L₂₄

P1 P2 P3

Display chip 630

(D)

"Off" state light beam

L₂₄

P1 P2 P3

Display chip 630

(E)

FIG. 9

First side
surface

$\beta_1$

Second side
surface

P2

$\gamma_1$

(A)

First side
surface

$\beta_2$

Second side
surface

P2

$\gamma_2$

(B)

FIG. 10

EP 4 741 886 A1

FIG. 11

EP 4 741 886 A1

FIG. 12

EP 4 741 886 A1

h2

h1

Last lens
element

Display chip 630

FIG. 13

Wireless
communication
module 1107

Interface 1102 for
external memory

Internal memory
1103

Audio module
1104

Video module
1105

Host processor 1101

I/O interface
1108

Display
circuit 1110

Modulator
1111

Power
module 1106

Light source
1112

Input
voltage

Video interface
1109

FIG. 14

Transportation means 100

Propulsion system 110
- Engine 114
- Energy source 113
- Transmission apparatus 112
- Wheel 111

Sensor system 120
- Global positioning system 126
- Inertial measurement unit 125
- Millimeter wave radar 124
- Lidar 123
- Camera 122
- Brake 121

Control system 130
- Steering unit 136
- Accelerator 135
- Brake unit 134
- Sensor fusion algorithm 133
- Computer vision system 132
- Route control system 131
- Obstacle avoidance system 137

Peripheral device 140
- Wireless communication system 144
- Touchscreen 143
- Microphone 142
- Speaker 141

Computer system 160
- Transceiver 162
- Processor 161
- Instructions 1631
- Memory 163

Power supply 150

User interface 170

EP 4 741 886 A1

FIG. 15

## INTERNATIONAL SEARCH REPORT

| International application No. |
|---|
| **PCT/CN2024/108157** |

### A. CLASSIFICATION OF SUBJECT MATTER

G02B5/04(2006.01)i;  G02B27/01(2006.01)i

According to International Patent Classification (IPC) or to both national classification and IPC

### B. FIELDS SEARCHED

Minimum documentation searched (classification system followed by classification symbols)

IPC:  G02B

Documentation searched other than minimum documentation to the extent that such documents are included in the fields searched

Electronic data base consulted during the international search (name of data base and, where practicable, search terms used)

CNABS, WPABS, WPABSC, ENTXT, ENTXTC, DWPI, VEN, CJFD: 棱镜, 四棱镜, 三棱镜, 三角形, 四边形, 第三, 第二, 车载, 抬头, 近眼, 显示, prism+, quadriprism+, quadri+, triangul+, triangl+, third+, second+, 3rd, 2nd, vehicl+, mount+, head+, up+, near+, eye+, hud+, display+

### C. DOCUMENTS CONSIDERED TO BE RELEVANT

| Category* | Citation of document, with indication, where appropriate, of the relevant passages | Relevant to claim No. |
|---|---|---|
| X | CN 1580867 A (DELTA ELECTRONICS, INC.) 16 February 2005 (2005-02-16) description, pages 5-8, and figures 2A-3B | 1-25 |
| X | CN 110031958 A (XI'AN INSTITUTE OF APPLIED OPTICS) 19 July 2019 (2019-07-19) description, paragraphs 33-44, and figures 2-8 | 1-25 |
| X | US 2003147158 A1 (TEXAS INSTRUMENTS INC.) 07 August 2003 (2003-08-07) description, paragraphs 26-56, and figures 2a-10 | 1-25 |
| X | US 2017003582 A1 (NATIONAL CHIAO TUNG UNIVERSITY) 05 January 2017 (2017-01-05) description, paragraphs 18-39, and figures 1-5C | 1-25 |
| A | CN 216696867 U (LINGXI-AR TECHNOLOGY CO., LTD.) 07 June 2022 (2022-06-07) entire document | 1-25 |
| A | CN 209486454 U (SICHUAN CHANGHONG ELECTRIC CO., LTD.) 11 October 2019 (2019-10-11) entire document | 1-25 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2024** | **08 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/108157**

| Patent document cited in search report | | | Publication date (day/month/year) | Patent family member(s) | | | Publication date (day/month/year) |
|---|---|---|---|---|---|---|---|
| CN | 1580867 | A | 16 February 2005 | None | | | |
| CN | 110031958 | A | 19 July 2019 | None | | | |
| US | 2003147158 | A1 | 07 August 2003 | US | 2007252957 | A1 | 01 November 2007 |
| | | | | US | 7665850 | B2 | 23 February 2010 |
| | | | | US | 7207678 | B2 | 24 April 2007 |
| | | | | US | 2010149626 | A1 | 17 June 2010 |
| | | | | US | 7993014 | B2 | 09 August 2011 |
| US | 2017003582 | A1 | 05 January 2017 | US | 9690180 | B2 | 27 June 2017 |
| CN | 216696867 | U | 07 June 2022 | None | | | |
| CN | 209486454 | U | 11 October 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310984749